(19) Europäisches Patentamt
European Patent Office
Office européen des brevets

(11) EP 0 534 056 B1

(12) # EUROPÄISCHE PATENTSCHRIFT

(45) Veröffentlichungstag und Bekanntmachung des Hinweises auf die Patenterteilung:
**16.10.1996 Patentblatt 1996/42**

(51) Int Cl.$^6$: **G01S 13/58**

(21) Anmeldenummer: **92108902.5**

(22) Anmeldetag: **27.05.1992**

(54) **Verfahren zur Bestimmung der Geschwindigkeit eines sich bewegenden Objekts mittels mindestens eines Dopplerradarsensors und Vorrichtung zum Ausführen des Verfahrens**

Method and device for measuring the speed of a moving object using at least one doppler radar sensor

Procédé et dispositif de mesure de la vitesse d'un objet mouvant utilisant au moins un détecteur de vitesse du type Radar-Doppler

(84) Benannte Vertragsstaaten:
**DE FR GB**

(30) Priorität: **28.08.1991 DE 4128560**

(43) Veröffentlichungstag der Anmeldung:
**31.03.1993 Patentblatt 1993/13**

(73) Patentinhaber: **Daimler-Benz Aerospace Aktiengesellschaft
81663 München (DE)**

(72) Erfinder:
- **Schulz, Matthias, Dipl.-Ing.
W-7901 Westerstetten (DE)**
- **Stammler, Walter, Dr.
W-7900 Ulm (DE)**

(74) Vertreter: **Schulze, Harald Rudolf, Dipl.-Ing. et al
Daimler-Benz Aerospace AG
Patentabteilung
Sedanstrasse 10
89077 Ulm (DE)**

(56) Entgegenhaltungen:
**EP-A- 0 335 009** **DE-A- 2 808 941**
**DE-A- 3 902 582** **US-A- 4 806 935**

- **ELEKTRONIK Bd. 40, Nr. 1, 8. Januar 1991, München, SS 78-80; W. SCHNEIDERBAUER: 'Doppler-Radar-Auswertung mittels Signalprozessor'**
- **ELECTRONIC DESIGN Bd. 36, Nr. 25, 10. November 1988, Hasbrouck Heights, SS 105-113; GONZALEZ ET AL.: 'Build a frequency threshold detector with fast FFT chip'**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 534 056 B1

Printed by Jouve, 75001 PARIS (FR)

## Beschreibung

Die Erfindung betrifft ein verfahren zur Bestimmung der Geschwindigkeit eines sich bewegenden Objekts mittels mindestens eines Dopplerradarsensors nach dem Oberbegriff des Patentanspruchs 1 sowie eine Vorrichtung zum Ausführen des Verfahrens. Ein solches Verfahren ist beispielsweise aus der DE 39 02 582 A1 bereits bekannt.

Verfahren dieser Art werden zur Bestimmung der Geschwindigkeit von sich bewegenden Objekten wie z.B. Fahr- oder Flugzeugen eingesetzt. Aber auch in der industriellen Automatisierungstechnik werden solche Verfahren zur Bestimmung der Geschwindigkeit sich bewegender Objekte eingesetzt, beispielsweise in der automatisierten Lagerhaltung oder in der automatisierten Produktion (z.B. Fließbandproduktion).

Die Verfahren nutzen den allgemein bekannten Dopplereffekt zur Bestimmung der Geschwindigkeit des sich bewegenden Objekts aus, indem die geschwindigkeitsabhängige Verschiebung der Frequenzlage eines von einem Dopplerradarsensor ausgesendeten und an einem relativ zu dem Sensor bewegten Gegenstand reflektierten Sendesignals ("Dopplerverschiebung") gemessen und ausgewertet wird.

Dabei kann der Dopplerradarsensor z.B. an dem sich bewegenden Objekt, z.B. einem fahrenden Kraftfahrzeug, befestigt sein und mit seiner Sende/Empfangsantenne z.B. auf die von dem Kraftfahrzeug befahrene Straße strahlen. In dem Fall wird das von dem Sensor ausgesendete Sendesignal an der Straßenoberfläche reflektiert und frequenzverschoben von dem Sensor detektiert. Der Sensor kann aber auch an einem festen Meßpunkt, z.B. an einer Schilderbrücke über der Autobahn, befestigt sein und ebenfalls mit seiner Sende/Empfangsantenne auf die Fahrspur unter der Schilderbrücke strahlen. In diesem Fall führt die Reflexion des vom Sensor ausgesendeten Sendesignals an der Straßenoberfläche nicht zu einer Dopplerverschiebung, da sich Sensor und Straße relativ zueinander nicht bewegen. Wird dagegen das Sendesignal des Sensors von einem auf der Fahrspur fahrenden Kraftfahrzeug reflektiert, kommt es bei dem reflektierten Signal zu einer Dopplerverschiebung, da Kraftfahrzeug und Sensor sich relativ zueinander bewegen.

Das aus der DE 39 02 582 A1 bekannte Verfahren ist zur Bestimmung der Geschwindigkeit von Straßenfahrzeugen vorgesehen. Dabei erfaßt ein z.B. am Straßenrand oder über der Fahrbahn aufgestellter und mit seinem Strahlungskegel unter einem Anstellwinkel β schräg nach vorn auf die Fahrbahn gerichteter Dopplerradarsensor die den Strahlungskegel mit einer bestimmten Geschwindigkeit kreuzenden Fahrzeuge. Das ausgesendete Sendesignal des Dopplerradarsensors wird von den fahrenden Fahrzeugen reflektiert und jeweils um die Dopplerfrequenz frequenzverschoben von dem Dopplerradarsensor detektiert.

Die beiden geschilderten Anwendungen (Sensor am bewegten Objekt bzw. Sensor ortsfest) weisen über weite Bereiche ähnliche Verarbeitungsschritte auf, die im folgenden beschrieben sind:

Das "Empfangssignal" des Dopplerradarsensors wird zunächst im Sensor aufbereitet und dann einer signalverarbeitenden Einheit zugeführt, in der anhand dieses aufbereiteten Empfangssignals die Geschwindigkeit des Fahrzeugs ermittelt wird.

Im einzelnen wird bei diesem bekannten Verfahren von dem Empfangssignal des Sensors zunächst ein digitales Basisbandsignal abgeleitet, das komplex oder reell sein kann und das beispielsweise durch Abmischen mit nachfolgendem Digitalisieren oder umgekehrt durch Digitalisieren mit nachfolgendem Abmischen erzeugt werden kann. Durch eine Fensterung wird das digitalisierte Basisbandsignal in einzelne zeitlich aufeinanderfolgende Signalabschnitte unterteilt, für die anschließend die zugehörigen Leistungsdichtespektren gebildet werden. Daran anschließend werden die Leistungsdichtespektren benachbarter Signalabschnitte gemittelt und anhand des gemittelten Leistungsdichtespektren die Geschwindigkeit des Objekts bestimmt.

In der Regel geschieht dies dadurch, daß in den gemittelten Leistungsdichtespektren die Frequenz bestimmt wird, bei der das Spektrum maximale Amplitude aufweist. Diese Frequenz wird als die in ihrer Frequenz lage um die Dopplerfrequenz gegenüber der Frequenz $f_o$ des ausgesendeten Signals verschobene Dopplerfrequenz $f_D$ definiert, aus der sich gemäß der Beziehung

$$v = \frac{c}{2f_o \sin\beta} \cdot f_D \qquad (1)$$

die Geschwindigkeit v des Fahrzeugs errechnen läßt, wobei c die Lichtgeschwindigkeit und β der Anstellwinkel ist. Gelegentlich wird anstelle der Frequenz des Amplitudenmaximums im gemittelten Leistungsdichtespektrum auch die Frequenz des Spektrenschwerpunkts als Dopplerfrequenz $f_D$ genommen.

Ferner ist bereits vorgeschlagen worden, zur Auswertung der Dopplerverschiebung, d.h. zur Bestimmung der Dopplerfrequenz $f_D$, pro Zeiteinheit die Anzahl der Nulldurchgänge des (abgemischten) Sensor-Empfangssignals zu zählen.

Bei all diesen Verfahren wird zum einen die Form der Antennenkeule des Dopplerradarsensors und zum anderen die insbesondere durch die schräg auf die reflektierende Ebene auffallende Strahlung sich ergebenden unterschiedlichen Abstände der einzelnen Reflexionspunkte vom Dopplerradarsensor bei der Auswertung nicht berücksichtigt, was zu einem systematischen Fehler in Form eines Offsets bei der Bestimmung der Dopplerfrequenz $f_D$ und damit verbunden der Geschwindigkeit v des Fahrzeugs führt.

Außerdem besteht die Gefahr, daß insbesondere bei der Suche nach dem Amplitudenmaximum in den gemittelten Leistungsdichtespektren einzelne durch Rauscheffekte oder außerhalb der Hauptkeule liegende Streuzentren hervorgerufene Maxima in den Spektren fälschlicherweise als die jeweils gesuchte Dopplerfrequenz $f_D$ identifiziert werden mit der Folge, daß die entsprechende Geschwindigkeit v des Fahrzeugs falsch bestimmt wird.

Die Aufgabe der Erfindung besteht darin, zum einen ein Verfahren der eingangs genannten Art anzugeben, das eine möglichst genaue Bestimmung der Geschwindigkeit des sich bewegenden Objekts ermöglicht, und zum anderen eine Vorrichtung zu schaffen, mit der ein solches Verfahren ausgeführt werden kann und die mit möglichst wenig Aufwand herstellbar ist.

Diese Aufgabe wird gelöst in bezug auf das zu schaffende Verfahren durch die im kennzeichnenden Teil des Patentanspruchs 1 angegebenen Merkmale und in bezug auf die zu schaffende Vorrichtung durch die im kennzeichnenden Teil des Patentanspruchs 23 angegebenen Merkmale. Die übrigen Ansprüche enthalten vorteilhafte Ausgestaltungen und/oder Weiterbildungen des erfindungsgemäßen Verfahrens (Ansprüche 2 bis 22) bzw. der erfindungsgemäßen Vorrichtung (Ansprüche 24 bis 29).

Das Verfahren der eingangs genannten Art wird erfindungsgemäß dahingehend verbessert,

- daß auf der Grundlage von theoretischen und/oder meßtechnisch gewonnenen Daten die Geschwindigkeit als Variable enthaltende Referenz-Leistungsdichtespektren gebildet werden;

- daß die Leistungsdichtespektren der einzelnen Signalabschnitte und/oder das jeweils durch Mittelung der Leistungsdichtespektren benachbarter Signalabschnitte erzeugte gemittelte Leistungsdichtespektrum mit mindestens einem Teil dieser Referenz-Leistungsdichtespektren verglichen werden (wird) und dabei jeweils gemäß einem vorgegebenen Optimierungskriterium und/oder gemäß einer vorgegebenen Fehlerfunktion das Maß an Übereinstimmung zwischen den miteinander verglichenen Spektren als Funktion der Geschwindigkeit bestimmt wird;

- daß der gemäß dem Optimierungskriterium und/oder gemaß der Fehlerfunktion die beste Übereinstimmung ergebende Geschwindigkeitswert als die Geschwindigkeit des Objekts bestimmt wird.

Der wesentliche Vorteil des erfindungsgemäßen Verfahren besteht darin, daß hier eine modellgestützte, auf a priori Wissen basierende Analyse vorgenommen wird. Durch die Bildung von Referenzspektren und deren Vergleich mit den gemessenen Spektren kann die Objektgeschwindigkeit weitaus genauer bestimmt werden als dies vorher der Fall war, da bei der Bildung der Referenzspektren die wesentlichen Randbedingungen der realen Umgebung vorab bereits berücksichtigt werden können, sodaß es im allgemeinen - je nach Aufwand bei der Bildung der Referenzspektren - im Prinzip zu jedem realen Meßspektrum ein entsprechendes - vorab gebildetes - Referenzspektrum gibt (oder zumindest ein sehr ähnliches), dem genau eine Geschwindigkeit zugeordnet ist, die in guter Näherung der Geschwindigkeit des Objekts entspricht.

Ein weiterer Vorteil des erfindungsgemäßen Verfahrens besteht darin, daß es insbesondere auch bei schwierigen Reflexionsbedingungen (z.B. Regen, Eis auf der Fahrbahn bei am Fahrzeug montiertem Sensor) angewendet werden kann. Weil hierbei die Signal/Rauschabstände gering sind und die Dopplerspektren stark zerklüftete Formen mit mehreren lokalen Maxima zeigen, können im Gegensatz zum erfindungsgemäßen Verfahren reine Maximumsuchverfahren in solchen Fällen nicht verwendet werden.

In einer bevorzugten Ausführungsform des erfindungsgemäßen Verfahrens ist daher vorgesehen, daß die Daten, auf deren Grundlage die Referenz-Leistungsdichtespektren gebildet werden, in mindestens einer Eichphase gewonnen werden und Angaben über die Antennencharakteristik der Antenne des Dopplersensors und/oder über die relative räumlich-geometrische Anordnung der Antenne zu dem Streuquerschnitt und/oder über die Form und/oder die Oberflächenbeschaffenheit des vorzugsweise planar und isotrop ausgebildeten Streuquerschnitts und/oder über den von Winkelsegment zu Winkelsegment innerhalb der Antennenkeule der Antenne variierenden Rückstreuwert des Streuquerschnitts enthalten.

Dies hat vor allem den Vorteil, daß man bei der Bildung der Referenz-Leistungsdichtespektren, unabhängig von der sich zeitlich anschließenden Meßphase, zum einen die Form der Antennenkeule und zum anderen die unterschiedlichen Abstände der einzelnen Reflexionspunkte vom Radarsensor bereits vorab berücksichtigen kann. Auch andere Störeinflüsse und/oder Besonderheiten des Sensors wie z.B. die Nebenzipfel können entsprechend berücksichtigt werden, so daß insgesamt eine höhere Genauigkeit bei der Bestimmung der Geschwindigkeit der sich bewegenden Objekte erreichbar ist.

Die mindestens eine separate Eichphase kann dabei z.B. vor Beginn der eigentlichen Geschwindigkeitsmessungen durchgeführt werden, z.B. nach der Herstellung des Sensors im Labor oder nach der Montage des Sensors am Fahrzeug bzw. am Straßenrand oder über der Fahrbahn bei dessen Inbetriebnahme. Denkbar ist aber auch, daß alternativ oder ergänzend hierzu weitere Eichphasen nach der Meßphase bzw. den Meßphasen und/oder zwischen einzelnen Meßphasen vorgesehen werden.

Die Referenzspektren können experimentell z. B. bei Versuchsfahrten oder im Labor ermittelt werden; sie können aber auch theoretisch anhand bekannter Literaturdaten oder anhand theoretischer Modelle ermittelt werden. Hinsichtlich der Speicherung der Daten für die Referenzspektren bzw. der Referenzspektren selbst ist nach bevorzugten Weiterbildungen der Erfindung vorgesehen, daß die Daten in der Eichphase abgespeichert werden und die Referenz-Leistungsdichtespektren erst in der Meß- und Vergleichsphase gebildet werden oder daß die Referenz-Leistungsdichtespektren bereits in der Eichphase gebildet und abgespeichert werden oder daß die Referenz-Leistungsdichtespektren bereits in der Eichphase gebildet und zusammen mit Daten abgespeichert werden.

Im folgenden wird die Erfindung anhand eines bevorzugten Ausführungsbeispiels des erfindungsgemäßen Verfahren beispielhaft in der Anwendung für eine Geschwindigkeitsmessung von einem Fahrzeug (von einem bewegten Objekt also) aus, wobei die Sende/Empfangsantenne den Untergrund (z.B. die Straße) beleuchtet, auf dem oder über dem sich das Fahrzeug (beispielsweise ein Kraftfahrzeug oder ein Flugzeug) bewegt. Die digitale Signalverarbeitung des vom Dopplerradarsensor ausgesendeten, am Untergrund reflektierten und vom Dopplerradarsensor detektierten und in seiner Frequenz lage um die Dopplerverschiebung verschobenen Empfangssignals gliedert sich in diesem Ausführungsbeispiel in die folgende Verarbeitungsschritte:

1. Digitalisierung des analog ins Basisband abgemischten Sensor-Empfangssignals:

$$x(i) = x_a(iT) \qquad (2)$$

T = $1/f_A$
$f_A$ : Abtastfrequenz
$x_a$ : analoges (abgemischtes) Sensor-Empfangssignal

2. Fensterung des Meßsignals in einzelne, vorzugsweise überlappende Signalabschnitte (gewichtet z.B. mit einem Rechteckfenster oder einem an den Rändern abgeflachten Fenster:

$$y_k(j) = x(i) \cdot w(j) \qquad (3)$$

j = 1 ... N
i = $k(N-N_ü)+j$
N : Fenster- bzw. Fast-Fourier-Transformations (FFT)-Länge
$N_ü$: Überlappung der Fenster
w(j): Gewichtungskoeffizienten für Fensterung (z.B. Hammingkoeffizienten)

3. Berechnung der zugehörigen Leistungsdichtespektren z.B. mittels einer FFT über die einzelnen Signalabschnitte:

$$|Y_k(f)|^2 = |FFT(y_k(j)|^2 \qquad (4)$$

(ggf. mit anschließender Normierung: $|\hat{Y}_k(f)|^2$) oder mittels eines nichtlinearen Spektralschätzverfahrens.

4. Mittelung der Leistungsdichtespektren von benachbarten Signalabschnitten

$$|\bar{Y}_m(f)|^2 = (1/a) \cdot \sum_{K=m-M+1}^{m} |Y_k(f)|^2 \qquad (5)$$

a : Konstante

m : 1, 2, 3,...
M : $\in$ IN

Bei den bekannten Verfahren wird in diesem Verfahrensstadium in einem fünften Verfahrensabschnitt nunmehr die Frequenz gesucht, bei der das Spektrum maximale Amplitude aufweist, und diese Frequenz als Dopplerfrequenz $f_D$ identifiziert.

Gemäß Gleichung (1) wird hieraus dann die zugehörige Geschwindigkeit v des Fahrzeugs bestimmt. Gelegentlich wird, wie bereits oben erwähnt, bei den bekannten Verfahren auch die Frequenz des Spektrenschwerpunkts als Dopplerfrequenz $f_D$ identifiziert.

Dieser letzte Verfahrensabschnitt der digitalen Signalverarbeitung, nämlich die Frequenz- und Geschwindigkeitsbestimmung für ein gegebenes gemitteltes Leistungsdichtespektrum (Gleichung (5)), wird in diesem Ausführungsbeispiel der Erfindung modifiziert. Der Grund für die Modifikation liegt darin, daß aufgrund der endlich breiten Antennenkeule verschiedene Anstellwinkel $\beta$ ihren Beitrag zum Dopplerspektrum liefern und a priori nicht klar ist, welcher Wert $\beta$ zur Geschwindigkeitsberechnung genommen werden darf. Hinzu kommt eine Amplitudenverzerrung des Dopplerspektrums durch die unterschiedlichen Abstände Sensor - Boden für die verschiedenen Segmente der Antennenkeule. Die vorgeschlagene Vorgehensweise ist in diesem Verfahrensstadium wie folgt:

5. Um den Einfluß der Antennenkeule und der unterschiedlichen Abstände Sensor - Boden für die verschiedenen Segmente der Antennenkeule bei der Auswertung berücksichtigen zu können, muß zunächst das Antennendiagramm vermessen werden, wobei man sinnvollerweise gleich den Entfernungseinfluß mit berücksichtigt. Dies kann man erreichen, indem man in der Eichphase die Leistung des Radarsignals längs der Bewegungsrichtung des Fahrzeugs ermittelt, wobei der Abstand des Sensors vom Boden $r_o$ ist (vgl. FIG. 1). Durch Quadratur bestimmt man hieraus das modifizierte Antennendiagramm $|H(\beta)|^2$, das Hin- und Rückweg berücksichtigt. Die abgetasteten Meßwerte von $|H(\beta)|^2$ legt man in einer Tabelle ab. Eine andere Vorgehensweise wäre, das übliche Antennendiagramm auf einem Kreisbogen oder einem Kugelausschnitt mit dem Sensor im Zentrum des Kreises bzw. der Kugel zu benutzen und die Entfernungsabhängigkeit rechnerisch zu berücksichtigen. So gilt z.B. im Fernfeld des Sensors, daß die Leistung des reflektierten Radarsignals proportional $1/r^4$ und damit proportional zu $((\cos\beta)/r)^4$ ist. Damit wäre

$$|H(\beta)|^2 = \left|c_1\ \phi(\beta)^2\ ((\cos\beta)/r_o)^2\right|^2 \cdot R(\beta) \qquad (6)$$

wobei $\phi(\beta)$ das gemessene Antennendiagramm darstellt. Durch den weiteren multiplikativen Faktor $R(\beta)$ läßt sich das winkelabhängige Rückstreuverhalten des Streuquerschnitts erfassen, sofern für die angestrahlten Flächen entsprechende materialabhängige Funktionen bekannt sind.

Löst man Gleichung (1) nach $\beta$ auf und schreibt für die zu bestimmende Dopplerfrequenz $f_D$ allgemein f, so erhält man

$$\beta = \arcsin(cf/(2vf_o)) \qquad (7)$$

Man kann mit Gleichung (7) nunmehr $|H(\beta)|^2$ auch als Funktion von v und f ausdrücken. Diese Funktion $|H(\beta(v,f))|^2$ beschreibt bei gleichförmiger Reflexion des Radarsignals am Untergrund die Form des resultierenden Doppler-Leistungsdichtespektrums, wenn sich das Fahrzeug mit der Geschwindigkeit v bewegt und stellt eines der entsprechenden Referenz-Leistungsspektren dar, die in der Eichphase ermittelt und anschließend abgespeichert werden.

$|H(\beta(v,f))|^2$ wird nun mit dem gemessenen Dopplerspektrum $|\bar{Y}_m(f)|^2$ verglichen. Hierbei wird die Gewindigkeit v solange variiert, bis $|H(\beta(v,f))|^2$ am besten mit $|\bar{Y}_m(f)|^2$ übereinstimmt (vgl. FIG. 2). Für die Messung der Übereinstimmung sind verschiedene Kriterien denkbar, so z.B. das Least-Mean-Square-Kriterium. Ein Maß für die Übereinstimmung zwischen beiden Funktionen liefert allgemein die Fehlerfunktion

$$E_m(v) = \frac{1}{(f_2-f_1)} \cdot \int_{f_1}^{f_2} \left| |H(\beta(v,f))|^{c1} - |\bar{Y}_m(f)|^{c1} \right|^{c2} df \qquad (8)$$

wobei das Integral numerisch aus Abtastwerten des Integranden bestimmt wird. Die positiven Konstanten $c_1$ und $c_2$ erlauben die Wahl einer speziellen Fehlerfunktion (Least-Mean-Square: $c_1=2$, $c_2=2$). Sinnvollerweise wählt man $f_1$ und $f_2$ so, daß die beiden Funktionen nur in dem Bereich verglichen werden, der grob der gesuchten Geschwindigkeit entspricht. Hierbei sind $|H(\beta(v,f))|$ und $|\bar{Y}_m(f)|$ zweckmäßigerweise in geeigneter Weise normiert, damit nicht bloße Aussteuerungsunterschiede das Ergebnis verfälschen, sondern $E_m(v)$ dann minimal wird, wenn die Form des Funktionsverlaufes über f möglichst gut übereinstimmt. Eine mögliche Normierung ist dabei die folgende:

$$|\hat{H}(\beta(v,f))| = |H(\beta(v,f))| \;/\; \max_{f_1<f<f_2}\{|H(\beta(v,f))|\} \qquad (9)$$

$$|\hat{Y}_m(f)| = |\bar{Y}_m(f)| \;/\; \max_{f_1<f<f_2}\{|\bar{Y}_m(f)|\} \qquad (10)$$

Man sucht nun (gegebenenfalls durch Interpolieren oder Extrapolieren) das Minimum der Fehlerfunktion $E_m(v)$ bezüglich v und erhält damit die gesuchte Geschwindigkeit v für den m-ten Signalabschnitt, hier v(m) genannt. Anstelle des in Gleichung (8) beschriebenen Fehlerkriteriums lassen sich auch andere wählen, so z. B.:

$$\tilde{E}_m(v) = \frac{1}{(f_2-f_1)} \cdot \int_{f_1}^{f_2} F_1\{F_2[H(\beta(v,f))]-F_2[\bar{Y}_m(f)]\}df \qquad (11)$$

6. In einem weiteren Schritt ist vorteilhaft eine weitere Glättung der ermittelten Geschwindigkeiten denkbar, indem man:

- z.B. jeweils den Mittelwert der Geschwindigkeiten benachbarter Signalabschnitte berechnet und ausgibt:

$$\bar{v}(n) = (1/N) \sum_{m=0}^{N-1} a(m)v(n-m) \qquad (12)$$

  was einer nichtrekursiven digitalen Filterung mit dem Filteroperator a(m) entspricht,

- oder alternativ hierzu eine rekursive digitale Filterung wählt,
- oder Regressionskurven berechnet,
- oder eine Kalmanfilterung durchführt usw.

Anstelle von Verfahren, die auf der numerischen Minimierung des Abstandsmaßes z.B. gemäß $\bar{Y}_m$ (v) bzw. $E_m(v)$ basieren, lassen sich auch andere Optimierungsansätze nutzen. Betrachtet man z.B. $\bar{Y}_m$ I(f)I als verrauschten Repräsentant der gesuchten Signalform IH(β(v,f))I, so läßt sich durch Kreuzkorrelation im Frequenzbereich

$$\varphi(v) = (1/(f_2-f_1)) \cdot \int_{f_1}^{f_2} |\bar{Y}_m(f)| \cdot |H(\beta(v,f))| \, df \qquad (13)$$

und Bestimmung des Maximums von φ (v) der gesuchte Wert von v abschätzen.

Nach dem ersten Verfahrensschnitt der digitalen Signalverarbeitung (der Ableitung des digitalen Basisbandsignals aus dem Sensor-Empfangssignal - vgl. Gleichung (2)) kann außerdem in einem zusätzlichen zwischengeschalteten Verfahrensschritt eine digitale Einschränkung des gesamten Analysefrequenzbereiches auf den im Augenblick relevanten Teilbereich um die momentane Dopplerfrequenz vorgenommen werden. Dies läßt sich z.B. durch digitale Quadraturdemodulation und anschließende digitale Tiefpaßfilterung sowie Unterabtastung (n:1) erreichen. Der Vorteil besteht im wesentlichen in einer Datenreduktion, die einen geringeren Rechenaufwand sowie unter Umständen höhere Genauigkeit bei der Bestimmung der Geschwindigkeit zur Folge hat. Besonders vorteilhaft hat hierbei sich eine Unterabtastung im Verhältnis 4:1 oder 8:1 oder 16:1 erwiesen.

Im folgenden wird die Erfindung anhand der Figuren näher erläutert. Es zeigen:

FIG. 1 die bereits erwähnte Anordnung des Sensors über einer Bezugsebene während der Eichphase zur Bildung der Referenz-Leistungsdichtespektren für eine bevorzugte Ausführungsform des erfindungsgemäßen Verfahrens;

FIG. 2 verschiedene mit der Sensoranordnung gemäß FIG. 1 gewonnene (normierte) Referenz-Leistungsdichtespektren $|H(\beta(v_1,f)|^2,\ldots, |H(\beta(v_4,f))|^2$ im Vergleich mit einem (normierten) gemittelten Leistungsdichtespektrum $|Y_m(f)|^2$ einer Messung;

FIG.3-4 das Blockschaltbild einer ersten (FIG. 3) und einer weiteren (FIG. 4) bevorzugten Ausführungsform der erfindungsgemäßen Vorrichtung zum Ausführen des erfindungsgemäßen Verfahrens.

Gemäß FIG. 1 ist der Dopplerradarsensor D in der mindestens einen Eichphase mit seiner Antennenhauptkeulen-Hauptstrahlachse $r_1$ unter einem vorgegebenen Haupt-Anstellwinkel $\beta_1$ zwischen 0° und 90° auf eine in einem vorgegebenen Abstand $r_o$ von dem Dopplerradarsensor D entfernt angeordnete Bezugsebene B gerichtet. Anschließend wird an verschiedenen, jeweils durch einen Anstellwinkel $\beta_1$, $\beta_1'$, $\beta_1''$ und durch eine Strahlachse $r_1$, $r_1'$, $r_1''$ charakterisierten Punkten $P_1$; $P_1'$; $P_1''$ innerhalb des von der Antennenhauptkeule ausgeleuchteten Radarflecks F in der Bezugsebene B die Leistung der vom Dopplerradarsensor D ausgesendeten Radarsignale ermittelt, quadriert, abgespeichert und zur Bildung der diesem Haupt-Anstellwinkel $\beta_1$ und diesem Abstand $r_o$ zugeordneten Referenz-Leistungsdichtespektren (vgl. $|H(\beta(v_1,f))|^2,\ldots, |H(\beta(v_4,f))|^2$ in FIG. 2) herangezogen.

Die Leistung an den verschiedenen Punkten $P_1$; $P_1'$; $P_1''$ innerhalb des Radarflecks F kann dabei z.B. direkt durch Messung der Leistung an dem jeweiligen Punkt $P_1$; $P_1'$; $P_1''$ selbst ermittelt werden und/oder indirekt z.B. durch Messung der Leistung an einem diesem jeweiligen Punkt $P_1$; $P_1'$; P1" jeweils zugeordneten weiteren Punkt auf der jeweils zugehörigen Strahlachse $r_1$; $r_1'$; $r_1''$; und anschließender Berechnung der Leistung an dem jeweiligen Punkten $P_1$; $P_1'$; $P_1''$, wobei die den einzelnen Punkten $P_1$; $P_1'$; $P_1''$ jeweils entsprechenden weiteren Punkte vorzugsweise auf einer gewölbten Fläche mit konstantem Abstand vom Dopplerradarsensor (D) liegen. (Letzteres entspricht der Aufnahme des üblichen Antennendiagramms).

In der bevorzugten Anordnung des Sensors in der Eichphase über der Bezugsebene gemäß FIG. 1 liegen die Punkte $P_1$; $P_1'$; $P_1''$ entlang der Schnittlinie S der durch die Antennenhauptkeulen-Hauptstrahlachse $r_1$ und der Abstandslinie $r_o$ des Dopplerradarsensors D von der Bezugsebene B aufgespannten Ebene mit der Bezugsebene B selbst, und zwar vorzugsweise zwischen den beiden 3dB-Randpunkten $P_1'$ und $P_1''$ der halben Leistung oder den beiden Randpunkten minimaler Leistung der Antennen-Hauptkeule auf dieser Schnittlinie S. Mit U ist in FIG. 1 die Linie bezeichnet, auf der alle 3-dB-Randpunkte der halben Leistung der Antennenhauptkeule liegen.

Eine zweckmäßige Erweiterung des vorstehend skizzierten Eichprinzips sieht vor, die Antennencharakteristik nicht nur längs der Geraden S zwischen den Punkten $P_1'$ und $P_2''$ zu vermessen, sondern für jedes Winkelsegment auch die zugehörigen azimutalen Anteile zu vermessen gemäß folgender Beziehung:

$$\phi^2(\beta) = \frac{1}{|\alpha_2-\alpha_1|} \cdot \int_{\alpha_1}^{\alpha_2} \phi^2(\beta,\alpha)\,d\alpha \qquad (14)$$

mit $\alpha$ = Azimutwinkel.

Zweckmäßigerweise wird der Dopplerradarsensor in der Eichphase genauso ausgerichtet wie in der Meßphase, sodaß die tatsächliche Bewegungsrichtung des Objekts mit der entsprechenden Schnittlinie S in FIG. 1 zusammenfällt (wenn also der am Fahrzeug befestigte Dopplerradarsensor mit seiner Antennenhauptkeule in Bewegungsrichtung schräg nach vorn oder nach hinten auf den Untergrund gerichtet ist und dabei der Seitenwinkel, d.h. die seitliche Abweichung der Sensorausrichtung von der Bewegungsrichtung des Objekts 0° beträgt).

Die während der Eichphase z. B. im Labor zu ermittelnden Referenz-Leistungsdichtespektren $H(\beta(v,f))$ werden sinnvollerweise nicht nur für die drei skizzierten Winkel $\beta_1$, $\beta_1'$, $\beta_1''$ bzw. die Punkte $P_1$, $P_1'$, $P_1''$, sondern für eine Vielzahl von beliebigen Winkeln $\beta_i$ (i=1,2,3...) in Elevationsrichtung bzw. beliebige Punkte $P_i$ (i=1,2,3...) auf S bzw. in F bestimmt. Der maximal abzudeckende Winkelbereich orientiert sich an der Antennencharakteristik und der Anwendung,kann aber die gesamte Hauptkeule bis hin zu dem ersten linken und rechten Nebenmaximum umfassen. Die Eichmessung wird zweckmäßigerweise auch für verschiedene Abstände $r_0$ durchgeführt, wenn zu erwarten ist, daß in der Meßphase der Abstand $r_0$ variiert und die Bezugsebene B in der Meßphase dem Antennennahfeld zuzuordnen ist.

Wie FIG. 2 zeigt, werden in der anschließenden Meßphase die in der Eichphase ermittelten, abgespeicherten und zweckmäßigerweise normierten Referenz-Leistungsdichtespektren $|\hat{H}(\beta(v_1,f))|^2,..., |\hat{H}(\beta(v_4,f))|^2$ mit dem aus dem Meßergebnis abgeleiteten gemittelten und ebenfalls zweckmäßigerweise normierten Leistungsdichtespektrum $|\hat{Y}_m(f)|^2$ des m-ten Signalabschnitts verglichen. Dabei wird die Geschwindigkeit (hier $v_3$), die dem Referenz-Leistungsdichtespektrum mit der geringsten Abweichung vom gemittelten Leistungsdichtespektrum $|\hat{Y}_m(f)|^2$ (hier $|\hat{H}(\beta(v_3,f))|^2$) zugeordnet ist (gegebenenfalls nach einer zusätzlichen Inter- oder Extrapolation) als die Geschwindigkeit v des Objekts identifiziert.

Dabei kann es zweckmäßig sein, daß die Geschwindigkeit des Objekts zunächst grob geschätzt wird und anschließend ein die grob geschätzte Geschwindigkeit enthaltender Geschwindigkeitsbereich festgelegt wird und daß beim Vergleich des gemittelten Leistungsdichtespektrums $|\hat{Y}_m(f)|^2$ mit den Referenz-Leistungsdichtespektren $|\hat{H}(\beta(v_1,f))|^2, ..., |\hat{H}(\beta(v_4,f))|^2$ nur diejenigen Referenz-Leistungsdichtespektren herangezogen werden, deren zugeordnete Geschwindigkeiten in den festgelegten Geschwindigkeitsbereich fallen, und/oder daß bei der Berechnung der Abweichung des gemittelten Leistungsdichtespektrums $|\hat{Y}_m(f)|^2$ von den zum Vergleich herangezogenen Referenz-Leistungsdichtespektren die Fehlerfunktion z.B. gemäß $E_m(v)$ bzw. $\bar{\gamma}_m(v)$ in demjenigem Frequenzbereich berechnet wird, der diesem festgelegten Geschwindigkeitsbereich entspricht.

Besonders vorteilhaft ist es, wenn das Empfangssignal des Dopplerradarsensors D zunächst analog in das Basisband abgemischt wird und anschließend dieses Basisbandsignal digitalisiert wird, wobei zweckmäßigerweise (zwecks Datenreduktion bzw. Verringerung des Rechenaufwands bzw. Erhöhung der Rechengenauigkeit) das digitale Basisbandsignal in seiner Bandbreite auf den jeweils relevanten Frequenz-Teilbereich um die momentane Dopplerfrequenz herum bandbegrenzt wird.

Die Bandbegrenzung des digitalen Basisbandsignals kann z.B. mittels einer Quadraturdemodulation mit anschließender digitaler Tiefpaßfilterung und Unterabtastung n:1, vorzugsweise 4:1 oder 8:1 oder 16:1 durchgeführt werden.

Ferner kann die Fensterung in Form einer Rechteckfensterung oder einer anderen, zu den Rändern hin abflachenden Fensterfunktion, vorzugsweise mit Überlappung durchgeführt werden. Die Leistungsdichtespektren der einzelnen Signalabschnitte können vorteilhafterweise mittels einer Diskreten Fouriertransformation (DFT) vorzugsweise in Form eines Fast Fouriertransformationsverfahrens (FFT) oder mittels eines nichtlinearen spektralen Schätzverfahrens gebildet werden. Eine anschließende Mittelung der Leistungsdichtespektren benachbarter Signalabschnitte wird zweckmäßigerweise durchgeführt, um das Signal/Rausch-Verhältnis zu verbessern.

Die in FIG. 3 gezeigte Vorrichtung zur Ausführung des erfindungsgemäßen Verfahrens enthält ein Antialiasingfilter 1, über das das analog abgemischte Basisbandsignal $x_a$ auf einen A/D-Wandler 2 gegeben wird und dort digitalisiert wird. Das digitalisierte Basisbandsignal wird anschließend (optional über eine den zu analysierenden Frequenzbereich einengende Bandbegrenzung 3, deren Durchlaßbereich entsprechend der zu erwartenden Geschwindigkeit v gesteuert wird) einer Fensterungseinheit 4 zugeführt, die z. B. mit (vorzugsweise überlappenden) Rechteck- oder an den Rändern abgeflachten Fenstern arbeitet. Das durch die Fensterung in einzelne Signalabschnitte unterteilte digitale Basisbandsignal wird anschließend auf eine Spektralanalyseeinheit, z. B. in Form einer FFT-Einheit (oder einer nach einem nichtlinearen Schätzverfahren arbeitenden Einheit) mit nachfolgender Betragsquadratbildung gegeben, die die zugehörigen Leistungsdichtespektren erzeugt. Anschließend können optional in einer Spektrenmittelungseinheit 6 die Leistungsdichtespektren benachbarter Signalabschnitte gemittelt werden. Die so gebildeten (eventuell gemittelten) Leistungsdichtespektren werden in einer nachgeschalteten Vergleichs- und Auswerteeinheit 8 mit den in einem Speicher 7 abgelegten Referenz-Leistungsdichtespektren verglichen und aus dem Vergleich, wie oben beschrieben, die Geschwindigkeit v des Objekts bestimmt. Optional kann in einer nachgeschalteten Glättungseinheit 9 der Wert der ermittelten Geschwindigkeit v noch geglättet werden, z. B. durch Mittelwertbildung ($\bar{v}$) benachbarter Geschwindigkeitswerte.

Die Vorrichtung in FIG. 4 ist eine bevorzugte Ausführungsform der Vorrichtung gemäß FIG. 3. Sie stellt im Detail dar, wie eine geschwindigkeitsgesteuerte Bandbegrenzung 3 und eine Speicherung der Referenz-Leistungsdichtespektren vorteilhafterweise realisiert werden können (in den beiden Figuren sind dabei gleiche Baugruppen mit gleichen Bezugszeichen versehen, sodaß zum großen Teil auf die Beschreibung der FIG. 3 verwiesen werden kann).

Als geschwindigkeitsgesteuerte Bandbegrenzung 3 ist in FIG. 4 eine Anordnung vorgesehen, die aus einem Quadraturdemodulator, bestehend aus Mischern $3_1$ und $3_2$, sowie aus nachgeschalteten digitalen Tiefpaßfiltern $3_3$ und $3_4$ und Unterabtast-Schalteinrichtungen $3_5$ und $3_6$ besteht, wobei den beiden Mischern $3_1$ und $3_2$ des Quadraturdemodulators über ein 90°-Hybrid $3_7$ das Referenzsignal der Frequenz $f_R$ eines Referenzoszillators $3_8$ um 90° gegeneinander phasenverschoben zugeführt ist.

Die Frequenz $f_R$ des Referenzoszillators $3_8$ wird dabei durch eine Steuereinheit $3_9$ eingestellt, die diese Einstellung gemäß den zuvor ermittelten Geschwindigkeitswerten vornimmt. Die Informationen über die zuvor ermittelte Geschwindigkeit des Objekts erhält die Steuereinheit $3_9$ dabei über Steuerleitung(en) $3_{10}$-$3_{12}$ von der (optionalen) Spektrenmittelungseinheit 6 und/oder der Vergleichs- und Auswerteeinheit 8 und/oder der (optionalen) Glättungseinheit 9.

Anstelle einer kompletten Abspeicherung der Referenz-Leistungsdichtespektren kann, wie in FIG. 4 gezeigt, auch eine Speicherung nur der für deren Rekonstruktion wesentlichen Referenzdaten vorgesehen werden. Diese in einem Speicher 7 abgelegten Referenzdaten müssen dann in einer zwischen Speicher $7_1$ und Vergleichs- und Auswerteeinheit 9 geschalteten Spektrengenerierungseinheit $7_2$ rekonstruiert werden.

Die Erfindung ist nicht auf die beschriebenen Ausführungsbeispiele beschränkt, sondern sinngemäß auf weitere anwendbar. Beispielsweise ist es möglich, für Messungen im Nahfeldbereich z. B. Referenz-Leistungsdichtespektren, die zu verschiedenen Abständen $r_{01}$, $r_{02}$, $r_{03}$ ... gehören, bei der Bestimmung der Geschwindigkeit heranzuziehen.

Ferner ist es möglich, anstelle eines am Fahrzeug angebrachten Dopplerradarsensors zwei Dopplerradarsensoren in einer "Januskopf"-Konfiguration zu benutzen, um die besonders durch die Federung des Fahrzeugs hervorgerufenen Nickbewegungen des Fahrzeugs und die damit verbundenen Verfälschungen der Messungen zu kompensieren (bei der "Januskopf"-Konfiguration ist der eine der beiden Dopplerradarsensoren nach hinten (d. h. entgegen der Fahrtrichtung) und der andere nach vorne (d. h. in Fahrtrichtung ausgerichtet). Für den Fall, daß mit $f_{D1}$ die ermittelte Dopplerfrequenz des ersten Sensors und mit $f_{D2}$ die Dopplerfrequenz des zweiten Sensors bezeichnet wird, ist bei identischen Anstellwinkeln von 45° die nickbewegungskompensierte Dopplerfrequenz $f_D = (f_{D1} + f_{D2})/2$, während der mittlere Nickwinkel durch $\alpha_N = (f_{D1} - f_{D2})/f_D$ gegeben ist. Weiterhin ist es möglich, die Erfindung auf Dopplersensoren anzuwenden, welche nicht nur den Betrag der Geschwindigkeit, sondern auch deren Vorzeichen liefern und somit die Bewegungsrichtung zu bestimmen erlauben.

Schließlich ist es möglich, daß die Daten in mindestens einer Eichphase gewonnen werden und Angaben über ein während einer hinreichend langen Meßzeit bei einer vorgegebenen Geschwindigkeit $v_o$ gemessenes (und gegebenenfalls anschließend normiertes) Referenz-Leistungsdichtespektrum $|H(\beta(v_o,f))|$ enthalten und daß die übrigen Referenz-Leistungsdichtespektren durch Umrechnung der Daten auf andere Geschwindigkeiten gebildet werden.

## Patentansprüche

1. Verfahren zur Bestimmung der Geschwindigkeit eines sich bewegenden Objekts mittels mindestens eines Dopplersensors, welcher am Objekt oder an einem Meßpunkt angebracht ist, bei welchem Verfahren von dem von einem Streuquerschnitt rückgestreuten Empfangssignal des mindestens einen Dopplersensors ein digitales Basisbandsignal abgeleitet wird, das anschließend durch eine Fensterung in einzelne Signalabschnitte unterteilt wird, für die anschließend die zugehörigen Leistungsdichtespektren gebildet werden, anhand deren die Geschwindigkeit des Objekts bestimmt wird, dadurch gekennzeichnet,

   - daß auf der Grundlage von theoretischen und/oder meßtechnisch gewonnenen Daten die Geschwindigkeit als Variable ($v_1$,...,$v_4$) enthaltende Referenz-Leistungsdichtespektren ($|H(\beta(v_1,f))|^2$,..., $|H(\beta(v_4,f))|^2$) gebildet werden;

   - daß die Leistungsdichtespektren ($|\hat{Y}_k(f)|^2$) der einzelnen Signalabschnitte und/oder das jeweils durch Mittelung

der Leistungsdichtespektren ($|\hat{Y}_k(f)|^2$) benachbarter Signalabschnitte erzeugte gemittelte Leistungsdichtespektrum ($|\hat{Y}_m(f)|^2$) mit mindestens einem Teil dieser Referenz-Leistungsdichtespektren ($|\hat{H}(\beta(v_1,f))|^2$, ..., $|\hat{H}(\beta(v_4,f))|^2$) werden (wird) und dabei jeweils gemäß einem vorgegebenen Optimierungskriterium und/oder gemäß einer vorgegebenen Fehlerfunktion ($E_m(v)$ ; $\tilde{\gamma}_m(v)$) das Maß an Übereinstimmung zwischen den miteinander verglichenen Spektren ($|\hat{Y}_k(f)|^2$) bzw. ($|\hat{Y}_m(f)|^2$), ($|\hat{H}(\beta(v_1,f))|^2$, ..., $|\hat{H}(\beta(v_4,f))|^2$) als Funktion der Geschwindigkeit ($v_1,...,v_4$) bestimmt wird;

- daß der gemäß dem Optimierungskriterium und/oder gemäß der Fehlerfunktion ($E_m(v)$; $\tilde{\gamma}_m(v)$) die beste Übereinstimmung ergebende Geschwindigkeitswert ($v_3$) als die Geschwindigkeit des Objekts bestimmt wird.

**2.** Verfahren nach Anspruch 1, dadurch gekennzeichnet, daß die Daten in mindestens einer Eichphase gewonnen werden und Angaben

- über die Antennencharakteristik der Antenne des Dopplersensors und/oder
- über die relative räumlich-geometrische Anordnung der Antenne zu dem Streuquerschnitt und/oder
- über die Form und/oder die Oberflächenbeschaffenheit des vorzugsweise planar und isotrop ausgebildeten Streuquerschnitts und/oder
- über den von Winkelsegment zu Winkelsegment innerhalb der Antennenkeule der Antenne variierenden Rückstreuwert ($R(\beta)$) des Streuquerschnitts enthalten.

**3.** Verfahren nach Anspruch 1, dadurch gekennzeichnet, daß die Daten in mindestens einer Eichphase gewonnen werden und Angaben über ein während einer hinreichend langen Meßzeit bei einer vorgegebenen Geschwindigkeit ($v_0$) gemessenes Referenz-Leistungsdichtespektrum ($|\hat{H}(\beta(v_0,f))|^2$) enthalten und daß die übrigen Referenz-Leistungsdichtespektren ($|\hat{H}(\beta(v_1,f))|^2$,...$|\hat{H}(\beta(v_4,f))|^2$) durch Umrechnung der Daten auf andere Geschwindigkeiten ($v_1,...,v_4$) gebildet werden.

**4.** Verfahren nach einem der Ansprüche 2 oder 3, dadurch gekennzeichnet,

- daß die Daten in der Eichphase abgespeichert werden und die Referenz-Leistungsdichtespektren ($|\hat{H}(\beta(v_1,f))|^2$, ..., $|\hat{H}(\beta(v_4,f))|^2$) erst in der Meß- und Vergleichsphase gebildet werden oder
- daß die Referenz-Leistungsdichtespektren ($|\hat{H}(\beta(v_1,f))|^2$, ..., $|\hat{H}(\beta(v_4,f))|^2$) bereits in der Eichphase gebildet und abgespeichert werden, oder
- daß die Referenz-Leistungsdichtespektren ($|\hat{H}(\beta(v_1,f))|^2$, ..., $|\hat{H}(\beta(v_4,f))|^2$) bereits in der Eichphase gebildet und zusammen mit Daten abgespeichert werden.

**5.** Verfahren nach einem der Ansprüche 2 bis 4, dadurch gekennzeichnet, daß in der mindestens einen Eichphase der Dopplerradarsensor (D) mit seiner Antennenhauptkeulen-Hauptstrahlachse ($r_1$) unter einem vorgegebenden Haupt-Anstellwinkel ($\beta_1$) zwischen O° und 90° auf eine in einem vorgegebenen Abstand ($r_o$) von dem Dopplerradarsensor (D) entfernt angeordnete Bezugsebene (B) gerichtet wird und daß anschließend an verschiedenen, jeweils durch einen Anstellwinkel ($\beta_1$; $\beta_1'$; $\beta_1''$) und durch eine Strahlachse ($r_1$; $r_1'$; $r_1''$) charakterisierten Punkten ($P_1$; $P_1'$; $P_1''$) innerhalb des von der Antennenhauptkeule ausgeleuchteten Radarflecks (F) in der Bezugsebene (B) die Leistung der vom Dopplerradarsensor (D) ausgesendeten Radarsignale ermittelt, quadriert, abgespeichert und zur Bildung der diesem Haupt-Anstellwinkel ($\beta_1$) und diesem Abstand ($r_o$) zugeordneten Referenz-Leistungsdichtespektren ($|\hat{H}(\beta(v_1,f))|^2$, ..., $|\hat{H}(\beta(v_4,f))|^2$) herangezogen wird.

**6.** Verfahren nach Anspruch 5, dadurch gekennzeichnet, daß die Leistung an den verschiedenen Punkten ($P_1$; $P_1'$; $P_1''$) innerhalb des Radarflecks (F) direkt durch Messung der Leistung an dem jeweiligen Punkt ($P_1$; $P_1'$; $P_1''$) ermittelt wird und/oder indirekt durch Messung der Leistung an einem diesem jeweiligen Punkt ($P_1$; $P_1'$; $P_1''$) jeweils zugeord-neten weiteren Punkt auf der zugehörigen Strahlachse ($r_1$; $r_1'$; $r_1''$) und anschließender Berechnung der Leistung an dem jeweiligen Punkt ($P_1$; $P_1'$; $P_1''$), wobei die den einzelnen Punkten ($P_1$; $P_1'$; $P_1''$) jeweils entsprechenden weiteren Punkte vorzugsweise auf einer gewölbten Fläche mit konstantem Abstand ($r_1$)vom Dopplerradarsensor (D) liegen.

**7.** Verfahren nach Anspruch 6, dadurch gekennzeichnet, daß die Punkte ($P_1$; $P_1'$; $P_1''$) entlang der Schnittlinie (S) der durch die Antennenhauptkeulen-Hauptstrahlachse ($r_1$) und der Abstandslinie ($r_o$) des Dopplerradarsensors (D) von der Bezugsebene (B) aufgespannten Ebene mit der Bezugsebene selbst (B) liegen, und zwar vorzugsweise zwischen den beiden 3dB-Randpunkten der halben Leistung (P', P") oder den beiden Randpunkten minimaler Leistung der Antennen-Hauptkeule auf dieser Schnittlinie (S).

**8.** Verfahren nach Anspruch 7, dadurch gekennzeichnet, daß zusätzlich für jedes Winkelsegment auch die zugehörigen azimutalen Anteile vermessen werden gemäß der Beziehung

$$\phi^2(\beta) = \frac{1}{|\alpha_2-\alpha_1|} \cdot \int_{\alpha_1}^{\alpha_2} \phi^2(\beta,\alpha)\,d\alpha$$

**9.** Verfahren nach einem der Ansprüche 5 bis 8, dadurch gekennzeichnet, daß für verschiedene Haupt-Anstellwinkel ($\beta_1$) der Antennenhauptkeulen-Hauptstrahlachse ($r_1$) und/oder für verschiedene Abstände ($r_o$) der Bezugsebene (B) vom Dopplerradarsensor (D) im Nahfeld- und/oder Fernfeldbereich des Dopplerradarsensors (D) die entsprechenden Referenz-Leistungsdichtespektren gebildet und abgespeichert werden.

**10.** Verfahren nach einem der Ansprüche 1 bis 9, dadurch gekennzeichnet, daß die Abweichungen des gemittelten Leistungsdichtespektrums ($|\bar{Y}_m(f)|^2$) von den Referenz-Leistungsdichtespektren ($|H(\beta(v_1,f))|^2, \ldots, |H(\beta(v_4,f))|^2$) gemäß der Fehlerfunktion

$$E_m(v) = \frac{1}{(f_2-f_1)} \cdot \int_{f_1}^{f_2} \left| |H(\beta(v,f))|^{c1} - |\bar{Y}_m(f)|^{c1} \right|^{c2} df$$

bestimmt werden mit positiven Konstanten $c_1$ und $c_2$ oder gemäß der Fehlerfunktion

$$\tilde{E}_m(v) = \frac{1}{(f_2-f_1)} \cdot \int_{f_1}^{f_2} F_1\{F_2[H(\beta(v,f))]-F_2[\bar{Y}_m(f)]\}df$$

mit vorgegebenen Funktionen $F_1$ und $F_2$.

**11.** Verfahren nach Anspruch 10, dadurch gekennzeichnet, daß mit $c_1 = c_2 = 2$ die Fehlerfunktion die Form eines Least-Mean-Square-Fits annimmt.

**12.** Verfahren nach einem der Ansprüche 1 bis 9, dadurch gekennzeichnet, daß das Maximum der durch Kreuzkorrelation im Frequenzbereich gemäß der Beziehung

$$\varphi(v) = (1/(f_2-f_1)) \cdot \int_{f_1}^{f_2} |\bar{Y}_m(f)| \cdot |H(\beta(v,f))| \, df$$

gewonnenen Funktion φ(v) bestimmt wird und der zu diesem Maximum gehörende Geschwindigkeitswert als die Geschwindigkeit des Objekts bestimmt wird.

**13.** Verfahren nach einem der vorhergehenden Ansprüche, dadurch gekennzeichnet, daß die Geschwindigkeit des Objekts zunächst grob geschätzt wird und anschließend ein die grob geschätzte Geschwindigkeit enthaltender Geschwindigkeitsbereich festgelegt wird und daß beim Vergleich des gemittelten Leistungsdichtespektrums ($|\hat{Y}_m(f)|^2$) mit den Referenz-Leistungsdichtespektren ($|\hat{H}(\beta(v_1,f))|^2, ..., |\hat{H}(\beta(v_4,f))|^2$) nur diejenigen Referenz-Leistungsdichtespektren herangezogen werden, deren zugeordnete Geschwindigkeiten in den festgelegten Geschwindigkeitsbereich fallen, und/oder daß bei der Berechnung der Abweichung des gemittelten Leistungsdichtespektrums ($|\hat{Y}_m(f)|^2$) von den zum Vergleich herangezogenen Referenz-Leistungsdichtespektren die Fehlerfunktion ($E_m(v)$; $\bar{Y}_m(v)$) nur in demjenigen Frequenzbereich berechnet wird, der diesem festgelegten Geschwindigkeitsbereich entspricht.

**14.** Verfahren nach einem der vorhergehenden Ansprüche, dadurch gekennzeichnet, daß das gemittelte Leistungsdichtespektrum ($|\hat{Y}_m(f)|^2$) und die Referenz-Leistungsdichtespektren ($|\hat{H}(\beta(v_1,f))|^2, ..., |\hat{H}(\beta(v_4,f))|^2$) vor dem Vergleich normiert werden, vorzugsweise gemäß der Vorschrift :

$$|\hat{H}(\beta(v,f))| = |H(\beta(v,f))| \ / \ \max_{f_1<f<f_2} \{|H(\beta(v,f))|\}$$

und

$$|\hat{Y}_m(f)| = |\bar{Y}_m(f)| \ / \ \max_{f_1<f<f_2} \{|\bar{Y}_m(f)|\}$$

**15.** Verfahren nach einem der vorangehenden Anprüche, dadurch gekennzeichnet, daß die den einzelnen gemittelten Leistungsdichtespektren ($|\hat{Y}_m(f)|^2$) zugeordneten Objektgeschwindigkeitswerte einer weiteren Glättung unterzogen werden.

**16.** Verfahren nach Anspruch 15, dadurch gekennzeichnet, daß die weitere Glättung durch Mittelwertbildung benachbarter Geschwindigkeitswerte, vorzugsweise mittels einer nichtrekursiven digitalen Filterung durchgeführt wird oder mittels einer rekursiven digitalen Filterung oder mittels Berechnung von Regressionskurven oder mittels einer Kalmanfilterung oder mittels eines Kreuzkorrelationsverfahrens im Frequenzbereich.

**17.** Verfahren nach einem der vorhergehenden Ansprüche, dadurch gekennzeichnet, daß das Empfangssignal des Dopplerradarsensors (D) analog in das Basisband abgemischt wird und daß dieses Basisbandsignal digitalisiert wird.

**18.** Verfahren nach Anspruch 17, dadurch gekennzeichnet, daß das digitale Basisbandsignal in seiner Bandbreite auf den jeweils relevanten Frequenz-Teilbereich um die momentane Dopplerfrequenz herum bandbegrenzt wird.

**19.** Verfahren nach Anspruch 18, dadurch gekennzeichnet, daß die Bandbegrenzung des digitalen Basisbandsignals mittels einer Quadraturdemodulation mit anschließender digitaler Tiefpaßfilterung und Unterabtastung n:1, vorzugsweise 4:1 oder 8:1 oder 16:1 durchgeführt wird.

**20.** Verfahren nach einem der vorhergehenden Ansprüche, dadurch gekennzeichnet, daß die Fensterung in Form einer Rechteckfensterung oder vorzugsweise in Form einer vorzugsweise überlappenden Fensterung mit an den Rändern abgeflachten Fenstern durchgeführt wird.

**21.** Verfahren nach einem der vorhergehenden Ansprüche, dadurch gekennzeichnet, daß die Leistungsdichtespektren der einzelnen Signalabschnitte mittels einer Digitalen Fouriertransformation, vorzugsweise in Form eines Fast-Fouriertransformationsverfahrens oder mittels eines nichtlinearen spektralen Schätzverfahrens gebildet werden.

**22.** Verfahren nach einem der vorhergehenden Ansprüche, dadurch gekennzeichnet, daß die Mittelung der Leistungsdichtespektren benachbarter Signalabschnitte mittels eines Welch-Verfahrens durchgeführt wird.

**23.** Vorrichtung zur Ausführung des Verfahrens zur Bestimmung der Geschwindigkeit eines sich bewegenden Objekts mittels mindestens eines Dopplersensors nach einem der vorhergehenden Ansprüche, welcher Dopplersensor am Objekt oder an einem Meßpunkt angebracht ist, bei welchem Verfahren von dem von einem Streuquerschnitt rückgestreuten Empfangssignal des mindestens einen Dopplersensors in einer Signalverarbeitungseinheit ein digitales Basisbandsignal abgeleitet wird, das anschließend durch eine Fensterung in einer Fensterungseinheit in einzelne Signalabschnitte unterteilt wird, für die anschließend in einer Spektralanalyseeinheit die zugehörigen Leistungsdichtespektren gebildet werden, anhand deren die Geschwindigkeit des Objekts bestimmt wird, dadurch gekennzeichnet,

- daß die eingangsseitig das digitalisierte Basisbandsignal empfangende Fensterungseinheit (4) ausgangsseitig mit dem Eingang der Spektralanalyseeinheit (5) verbunden ist;
- daß ein die Referenz-Leistungsdichtespektren enthaltender Speicher (7) sowie die Spektralanalyseeinheit (5) ausgangsseitig an eine Vergleichs- und Auswerteeinheit (8) zur Bestimmung der Objektgeschwindigkeit angeschlossen sind.

**24.** Vorrichtung nach Anspruch 23, dadurch gekennzeichnet,

- daß die Fensterungseinheit (4) mit vorzugsweise überlappenden Rechteck- oder an den Rändern abgeflachten Fenstern ($4_1$; $4_2$) arbeitet, und/oder
- daß die Spektralanalyseeinheit (5) gemäß einem Digitalen Fouriertransformationsverfahren, vorzugsweise gemäß einem Fast-Fouriertransformationsverfahren arbeitet oder nach einem nichtlinearen spektralen Schätzverfahren, und/oder
- daß zwischen der Spektralanalyseeinheit (5) und der Vergleichs- und Auswerteeinheit (8) eine Spektrenmittelungseinheit (6) geschaltet ist.

**25.** Vorrichtung nach Anspruch 23 bis 24, dadurch gekennzeichnet, daß der Fensterungseinheit (4) eingangsseitig ein A/D-Wandler (2) und diesem vorzugsweise ein Antialiasingfilter (1) vorgeschaltet ist, und/oder daß der Vergleichs- und Auswerteeinheit (8) ausgangsseitig eine Glättungseinheit (9) zur Glättung der von der Vergleichs-Auswerteeinheit (8) ausgegebenen Geschwindigkeitswerte nachgeschaltet ist.

**26.** Vorrichtung nach Anspruch 25, dadurch gekennzeichnet, daß zwischen A/D-Wandler (2) und Fensterungseinheit (4) eine Bandbegrenzungseinheit (3) geschaltet ist.

**27.** Vorrichtung nach Anspruch 26, dadurch gekennzeichnet, daß die Bandbegrenzungseinheit (3) aus einem dem A/D-Wandler (2) ausgangsseitig nachgeschalteten Quadraturdemodulator ($3_1$, $3_2$, $3_7$, $3_8$), einer diesem Demodulator ($3_1$, $3_2$, $3_7$, $3_8$) nachgeschalteten digitalen Tiefpaßfiltereinheit ($3_3$, $3_4$) und einer dieser Filtereinheit ($3_3$, $3_4$) nachgeschalteten Unterabtastungs-Schalteinrichtungseinheit ($3_5$, $3_6$) besteht.

**28.** Vorrichtung nach Anspruch 27, dadurch gekennzeichnet, daß der Quadraturdemodulator ($3_1$, $3_2$, $3_7$, $3_8$) über eine Steuereinheit ($3_9$) in seiner Referenzfrequenz ($f_R$) in Abhängigkeit von der momentanen Geschwindigkeit des Objekts einstellbar ist.

29. Vorrichtung nach Anspruch 28, dadurch gekennzeichnet daß die Steuereinheit ($3_9$) über eine oder mehrere Steuerleitungen ($3_{10}$-$3_{12}$) von der Spektrenmittelungseinheit (6) und/oder der Vergleichs- und Auswerteeinheit (8) und/oder der Glättungseinheit (9) Steuersignale zur Einstellung der Referenzfrequenz ($f_R$) des Quadraturdemodulators ($3_1$, $3_2$, $3_7$, $3_8$) erhält.

## Claims

1. Method for ascertaining the speed of a moving object by means of at least one Doppler sensor which is mounted at the object or at a measurement point, in which method a digital base band signal is derived from the received signal, which has been scattered back by a scatter cross-section, of the at least one Doppler sensor and is subsequently subdivided by a windowing operation into individual signal portions, for which the associated power density spectra, with the aid of which the speed of the object is ascertained, are formed subsequently, characterised thereby,

   - that reference power density spectra ($|\hat{H}(\beta(v_1,f))|^2$ to $|\hat{H}(\beta(v_4,f))|^2$, which contain the speed as variable ($v_1$ to $v_4$), are formed on the basis of data obtained theoretically and/or by measurements technique,
   - that the power density spectra ($|\hat{Y}_k(f)|^2$) of the individual signal portions and/or the mean power density spectrum ($|\hat{Y}_m(f)|^2$), which has been produced each time by averaging the power density spectra ($|\hat{Y}_k(f)|2$) of neighbouring signal portions, is or are compared with at least a part of those reference power density spectra ($|\hat{H}(\beta(v_1,f))|^2$ to $|\hat{H}(\beta(v_4,f))|^2$) and the measure of agreement between the mutually compared spectra ($|\hat{Y}_k(f)|^2$) or ($\hat{Y}_m(f)|^2$) and ($|H(\beta(v_1,f))|^2$ to $|H(\beta(v_4,f))|^2$) is then associated as a function of the speed ($v_1$ to $v_4$) each time according to a given optimising criterion and/or according to a given error function ($E_m(v)$; $\tilde{\gamma}_m(v)$) and
   - that the speed value ($v_3$), which results in the best agreement according to the optimising criterion and/or according to the error function ($E_m(v)$; $\tilde{\gamma}_m(v)$), is ascertained as the speed of the object.

2. Method according to claim 1, characterised thereby, that the data are obtained in at least one calibration phase and contain statements

   - about the aerial characteristics of the aerial of the Doppler sensor and/or
   - about the relative three-dimensionally geometric arrangement of the aerial relative to the scatter cross-section and/or
   - about the shape and/or the surface properties of the preferably planarly and isotropically scatter cross-section and/or
   - about the backscatter value ($R(\beta)$), which varies from angular segment to angular segment of the aerial lobe of the aerial, of the scatter cross-section.

3. Method according to claim 1, characterised thereby, that the data are obtained in at least one calibration phase and contain statements about a reference power density spectrum ($|\hat{H}(\beta(v_0,f))|^2$) measured at a given speed ($v_0$) over a sufficiently long measurement time and that the remaining reference power density spectra ($|\hat{H}(\beta(v_1,f))|^2$ to $|\hat{H}(\beta(v_4,f))|^2$) are formed by mathematical conversion of the data to other speeds ($v_1$ to $v_4$).

4. Method according to one of the claims 2 and 3, characterised thereby,

   - that the data are stored in the calibration phase and the reference power density spectra ($|\hat{H}(\beta(v_1,f))|^2$ to $|\hat{H}(\beta(v_4,f))|^2$) are formed only in the measurement and comparison phase or
   - that the reference power density spectra ($|\hat{H}(\beta(v_1,f))|^2$ to $|\hat{H}(\beta(v_4,f))|^2$) are formed and stored already in the calibration phase or
   - that the reference power density spectra ($|\hat{H}(\beta(v_1,f))|^2$ to $|\hat{H}(\beta(v_4,f))|^2$) are formed already in the calibration phase and stored together with data.

5. Method according to one of the claims 2 to 4, characterised thereby, that the Doppler radar sensor (D) is oriented by its aerial main lobe main beam axis ($r_1$) in the at least one calibration phase at a preset main setting angle ($\beta_1$) between 0° and 90° to a reference plane (B), which is arranged to be spaced by a given spacing ($r_0$) from the Doppler radar sensor (D) and that subsequently - at different points ($P_1$; $P_1'$; $P_1''$), which are each characterised by a respective setting angle ($\beta_1$;$\beta_1'$;$\beta_1''$) and by a respective beam axis ($r_1$ ;$r_1'$;$r_1''$), in the reference plane (B) within the radar spot (F) illuminated by the main aerial lobe - the power of the radar signals emitted by the Doppler radar sensor (D) is ascertained, squared, stored and drawn upon for the formation of the reference power density spectra

($|\hat{H}(\beta(v_1,f))|^2$ to $|\hat{H}(\beta(v_4,f))|^2$) associated with this main setting angle (1) and this spacing ($r_0$).

6. Method according to claim 5, characterised thereby, that the power at the different points ($P_1$;$P_1$';$P_1$") within the radar spot (F) is ascertained directly by measurement of the power at the respective point ($P_1$;$P_1$';$P_1$") and/or indirectly by measurement of the power at a further point, which is respectively associated with this respective point ($P_1$;$P_1$';$P_1$"), on the associated beam axis ($r_1$;$r_1$';$r_1$") and subsequent computation of the power at the respective point ($P_1$;$P_1$'; $P_1$"), wherein the further points respectively corresponding with the individual points ($P_1$;$P_1$';$P_1$") preferably lie on a curved surface at a constant spacing ($r_1$) from the Doppler radar sensor (D).

7. Method according to claim 6, characterised thereby, that the points ($P_1$;$P_1$';$P_1$") lie along the intersection line (S) of the plane, which is sDanned by the aerial main lobe main beam axis ($r_1$) and the spacing line ($r_0$) of the Doppler radar sensor (D) from the reference plane (B), with the reference plane (B) itself and namely preferably between both 3dB boundary points of the half power (P',P") or both the boundary points of minimum power of the aerial main lobe on this intersection line (S).

8. Method according to claim 7, characterised thereby, that the associated azimuth components for each angular segment are also measured according to the relationship

$$\phi^2(\beta) = \frac{1}{|\alpha_2-\alpha_1|} \cdot \int_{\alpha_1}^{\alpha_2} \phi^2(\beta,\alpha)\,d\alpha$$

9. Method according to one of the claims 5 to 8, characterised thereby, that the corresponding reference power density spectra are formed and stored for different main setting angles ($\beta_1$) of the aerial main lobe main beam axis ($r_1$) and/or for different spacings ($r_0$) of the reference plane (B) from the Doppler radar sensor (D) in the short range field and/or the long range field of the Doppler radar sensor (D).

10. Method according to one of the claims 1 to 9, characterised thereby, that the deviations of the mean power density spectrum ($|Y_m(f)|^2$) from the reference power density spectra ($|\hat{H}(\beta(v_1,f))|^2$ to $|\hat{H}(\beta(v_4,f))|^2$) are ascertained according to the error function

$$E_m(v) = \frac{1}{(f_2-f_1)} \cdot \int_{f_1}^{f_2} \left| |H(\beta(v,f))|^{c1} - |\bar{Y}_m(f)|^{c1} \right|^{c2} df$$

with positive constants $c_1$ and $c_2$ or according to the error function

$$\tilde{E}_m(v) = \frac{1}{(f_2-f_1)} \cdot \int_{f_1}^{f_2} F_1\{F_2[H(\beta(v,f))]-F_2[\bar{Y}_m(f)]\}df$$

with given functions $F_1$ and $F_2$.

**11.** Method according to claim 10, characterised thereby, that with $c_1 = c_2 = 2$, the error function assumes the form of "least mean square fits".

**12.** Method according to one of the claims 1 to 9, characterised thereby that the maximum of the function φ(v), which is obtained by cross correlation in the frequency range according to the relationship

$$\varphi(v) = (1/(f_2-f_1)) \cdot \int_{f_1}^{f_2} |\bar{Y}_m(f)| \cdot |H(\beta(v,f))| \, df$$

is ascertained and the speed value belonging to this maximum is ascertained as the speed of the object.

**13.** Method according to one of the preceding claims, characterised thereby, that the speed of the object is initially estimated roughly and a speed range including the roughly estimated speed is fixed subsequently and that only those reference power density spectra are drawn upon for the comparison of the mean power density spectrum ($|\bar{Y}_m(f)|^2$) with the reference power density spectra ($|H(\beta(v_1,f))|^2$ to $|H(\beta(v_4,f))|^2$), the associated speeds of which fall into the fixed speed range and/or that, for the computation of the deviation of the mean power density spectrum ($|\bar{Y}_m(f)|^2$) of the reference power density spectra drawn upon for the comparison, the error function ($E_m(v)$; $\tilde{Y}_m(v)$) is computed in only that frequency range which corresponds with this fixed speed range.

**14.** Method according to one of the preceding claims, characterised thereby, that the mean power density spectrum ($|\bar{Y}_m(f)|^2$) and the reference power density spectra ($|H(\beta(v_1,f))|^2$ to $|H(\beta(v_4,f))|^2$) are normalised before the comparison, preferably according to the rule:

$$|\hat{H}(\beta(v,f))| = |H(\beta(v,f))| \;/\; \max_{f_1<f<f_2} \{|H(\beta(v,f))|\}$$

and

$$|\hat{Y}_m(f)| = |\bar{Y}_m(f)| \;/\; \max_{f_1<f<f_2} \{|\bar{Y}_m(f)|\}$$

**15.** Method according to one of the preceding claims, characterised thereby, that the object speed values associated with the individual mean power density spectra ($|\bar{Y}_m(f)|^2$) are subjected to a further smoothing.

**16.** Method according to claim 15, characterised thereby, that the further smoothing is performed by mean value formation of neighbouring speed values, preferably by means of a non-recursive digital filtering or by means of a recursive digital filtering or by means of computation of regression curves or by means of a Kalman filtering or by means of a cross-correlation procedure in the frequency range.

**17.** Method according to one of the preceding claims, characterised thereby, that the received signal of the Doppler radar sensor (D) is mixed down in analog into the base band and that this base band signal is digitalised.

**18.** Method according to claim 17, characterised thereby, that the digital base band signal is band-limited in its bandwidth to the respectively relevant partial frequency range around the instantaneous Doppler frequency.

**19.** Method according to claim 18, characterised thereby, that the band limitation of the digital base band signal is performed by means of a quadrature demodulation with subsequent digital low-pass filtering and subscanning n: 1, preferably 4:1 or 8:1 or 16:1.

**20.** Method according to one of the preceding claims, characterised thereby, that the windowing operation is performed in the form of a rectangular windowing or preferably in the form of a preferably overlapping windowing with windows flattened at the edges.

**21.** Method according to one of the preceding claims, characterised thereby, that the power density spectra of the individual signal portions are formed by means of a digital Fourier transformation, preferably in the form of a fast Fourier transformation procedure, or by means of a non-linear spectral estimation method.

**22.** Method according to one of the preceding claims, characterised thereby, that the averaging of the power density spectra of neighbouring signal portions is performed by means of a Welch process.

**23.** Device for the performance of the method for ascertaining the speed of a moving object by means of at least one Doppler sensor according to one of the preceding claims, which Doppler sensor is mounted at the object or at a measurement point, in which method a digital base band signal is derived from the received signal, which has been scattered back by a scatter cross-section, of the at least one Doppler sensor in a signal processing unit and is subsequently subdivided by a windowing operation in a window unit into individual signal portions, for which the associated power density spectra, with the aid of which the speed of the object is ascertained, are formed subsequently in a spectral analysis unit, characterised thereby,

- that the window unit (4), which receives the digitalised base band signal at its input, is connected at its output with the input of the spectral analysis unit (5) and
- that a storage device (7) containing the reference power density spectra as well as the spectral analysis unit (5) are connected at the output to a comparing and evaluating unit (8) for ascertaining the speed of the object.

**24.** Device according to claim 23, characterised thereby,

- that the window unit (4) operates with preferably overlapping rectangular windows ($4_1$; $4_2$) or windows ($4_1$; $4_2$) flattened at the edges and/or
- that the spectral analysis unit (5) operates according to a digital Fourier transformation method, preferably according to a fast Fourier transformation method or according to a non-linear spectral estimation method and/or
- that spectra-averaging unit (6) is connected between the spectral analysis unit (5) and the comparing and evaluating unit (8).

**25.** Device according to claim 23 and 24, characterised thereby, that the window unit (4) is preceded at the input by an analog-to-digital converter (2) and this preferably by an anti-aliassing filter (1) and/or that the comparing and evaluating unit (8) is followed at the output by a smoothing unit (9) for the smoothing of the speed values issued by the comparing and evaluating unit (8).

**26.** Device according to claim 25, characterised thereby, that a band-limiting unit (3) is connected between the analog-to-digital converter (2) and the window unit (4).

**27.** Device according to claim 26, characterised thereby, that the band-limiting unit (3) consists of a quadrature demodulator ($3_1$, $3_2$, $3_7$, $3_8$) connected behind the analog-to-digital converter (2) at the output, a digital low-pass filter unit ($3_3$, $3_4$) connected behind this demodulator ($3_1$, $3_2$, $3_7$, $3_8$) and a subscanning switch equipment unit ($3_5$, $3_6$) connected behind this filter unit ($3_3$, $3_4$).

**28.** Device according to claim 27, characterised thereby, that the quadrature demodulator ($3_1$, $3_2$, $3_7$, $3_8$) is settable in its reference frequency ($f_R$) by way of a control unit (39) in dependence on the instantaneous speed of the object.

**29.** Device according to claim 28, characterised thereby, that the control unit ($3_9$) receives control signals for the setting of the reference frequency ($f_R$) of the quadrature demodulator ($3_1$, $3_2$, $3_7$, $3_8$) by way of one or more control lines ($3_{10}$ to $3_{12}$) from the spectra-averaging unit (6) and/or the comparing and evaluating unit (8) and/or the smoothing unit (9).

**Revendications**

1. Procédé pour déterminer la vitesse d'un objet en mouvement au moyen d'au moins un détecteur Doppler placé sur l'objet ou à un point de mesure, procédé selon lequel un signal numérique en bande de base est tiré du signal de réception, rétrodiffusé par une aire de diffusion, du détecteur Doppler ou des détecteurs Doppler, signal numérique qui est ensuite subdivisé par un fenêtrage en portions de signal individuelles, pour lesquelles sont formés après cela les spectres de densité de puissance coordonnés, à l'aide desquels est déterminée la vitesse de l'objet, caractérisé en ce

   - que des spectres de densité de puissance de référence ($|\hat{H}(\beta(v_1,f))|^2, \ldots, |\hat{H}(\beta(v_4,f))|_2$, contenant la vitesse comme variable ($v_1,\ldots,v_4$), sont formés sur la base de données théoriques et/ou de données obtenues par une technique de mesure;
   - que les spectres de densité de puissance ($|\hat{Y}_k(f)|^2$) des différentes portions de signal et/ou le spectre de densité de puissance moyen ($|\hat{Y}_m(f)|^2$), généré chaque fois par établissement de la moyenne des spectres de densité de puissance ($|\hat{Y}_k(f)|^2$), sont comparés ou est comparé avec au moins une partie de ces spectres de densité de puissance de référence ($|\hat{H}(\beta(v_1,f))|^2, \ldots, |\hat{H}/\beta(v_4,f)|^2$), avec détermination chaque fois, selon un critère d'optimisation préfixé et/ou selon une fonction d'erreur ($E_m(v)$; $\tilde{Y}_m(v)$) préfixée, du degré de concordance entre les spectres ($|\hat{Y}_k(f)|^2$) ou ($|\hat{Y}_m(f)|^2$), ($|\hat{H}(\beta(v_1,f)|^2, \ldots, |\hat{H}(\beta(v_4,f)|^2$) comparés entre eux en fonction de la vitesse ($v_1,\ldots, v_4$); et
   - que la valeur de vitesse ($v_3$) fournissant la meilleure concordance selon le critère d'optimisation et/ou selon la fonction d'erreur ($E_m(v)$; $\tilde{Y}_m(v)$), est déterminée comme la vitesse de l'objet.

2. Procédé selon la revendication 1, caractérisé en ce que les données sont obtenues en au moins une phase d'étalonnage et contiennent des indications

   - sur la caractéristique de l'antenne du détecteur Doppler et/ou
   - sur la disposition géométrique dans l'espace de l'antenne par rapport à l'aire de diffusion et/ou
   - sur la forme et/ou la nature de la surface de l'aire de diffusion, de préférence de configuration planaire et isotrope, et/ou
   - sur la valeur de rétrodiffusion ($R(\beta)$) de l'aire de diffusion, variant d'un segment d'angle à l'autre à l'intérieur du lobe de rayonnement de l'antenne.

3. Procédé selon la revendication 1, caractérisé en ce que les données sont obtenues dans au moins une phase d'étalonnage et contiennent des indications relatives à un spectre de densité de puissance de référence ($|\hat{H}(\beta(v_0, f))|^2$) mesuré pendant un temps de mesure suffisamment long à une vitesse ($v_0$) préfixée, et que les autres spectres de densité de puissance de référence ($|\hat{H}(\beta(v_1,f))|^2,\ldots, |\hat{H}(\beta(v_4,f))|^2$) sont formés par conversion mathématique des données pour d'autres vitesses ($v_1,\ldots,v_4$).

4. Procédé selon la revendication 2 ou 3, caractérisé en ce

   - que les données sont mises en mémoire dans la phase d'étalonnage et les spectres de densité de puissance de référence ($|\hat{H}(\beta(v_1,f))|^2,\ldots, |\hat{H}(\beta(v_4,f))|^2$) sont seulement formés dans la phase de mesure et de comparaison ou
   - que les spectres de densité de puissance de référence ($|\hat{H}(\beta(v_1,f))|^2, \ldots, |\hat{H}(\beta(v_4,f))|^2$) sont déjà formés et mis en mémoire dans la phase d'étalonnage ou encore
   - que les spectres de densité de puissance de référence ($|\hat{H}(\beta(v_1,f)|^2, \ldots, |\hat{H}(\beta(v_4,f))|^2$) sont déjà formés dans la phase d'étalonnage et mis en mémoire ensemble avec des données.

5. Procédé selon une des revendications 2 à 4, caractérisé en ce que, dans la phase d'étalonnage ou dans au moins une phase d'étalonnage, le détecteur radar Doppler (D) est dirigé, par l'axe principal de faisceau ($r_1$) du lobe de rayonnement principal de son antenne, sous un angle principal d'inclinaison ($\beta_1$) préfixé entre 0° et 90°, sur un plan de référence (B) placé à une distance ($r_o$) préfixé du détecteur radar Doppler (D) et que, ensuite, en différents points ($P_1$) définis chacun par un angle d'inclinaison ($\beta_1$; $\beta_1'$; $\beta_1''$) et un axe de faisceau ($r_1$; $r_1'$; $r_1''$) à l'intérieur du spot radar (F) illuminé par le lobe principal de l'antenne dans le plan de référence (B), la puissance des signaux radar émis par le détecteur radar Doppler (D) est déterminée, élevée au carré, mise en mémoire et utilisée pour la formation des spectres de densité de puissance de référence ($|\hat{H}(\beta(v_1,f))|^2,\ldots,|\hat{H}(\beta(v_4,f))|^2$) coordonnés à cet angle principal d'inclinaison ($\beta_1$) et à cette distance ($r_o$).

6. Procédé selon la revendication 5, caractérisé en ce que la puissance aux différents points ($P_1$; $P_1$'; $P_1$") à l'intérieur du spot radar (F) est déterminée directement par mesure de la puissance au point ($P_1$; $P_1$'; $P_1$") concerné et/ou indirectement par mesure de la puissance à un autre point coordonné chaque fois au point ($P_1$; $P_1$'; $P_1$") concerné et situé sur l'axe de faisceau ($r_1$: $r_1$'; $r_1$") correspondant et par le calcul consécutif de la puissance au point $P_1$; $P_1$'; $P_1$") concerné, les autres points, correspondant chacun aux différents points ($P_1$; $P_1$'; $P_1$"), étant de préférence situés sur une surface concave ayant une distance ($r_1$) constante du détecteur radar Doppler (D).

7. Procédé selon la revendication 6, caractérisée en ce que les points ($P_2$; $P_1$'; $P_1$") sont situés le long de la ligne d'intersection (S) du plan sous-tendu par l'axe principal de faisceau ($r_1$) du lobe principal d'antenne et la ligne de distance ($r_o$) du détecteur radar Doppler (D) du plan de référence (B) et de ce plan de référence (B) lui-même, de préférence entre les deux points marginaux (P', P") à 3dB, correspondant à la moitié de la puissance, ou les deux points marginaux de puissance minimale du lobe principal de l'antenne sur cette ligne d'intersection (S).

8. Procédé selon la revendication 7, caractérisé en ce que les fractions azimutales associées sont mesurées en plus pour chaque segment d'angle, selon la relation

$$\varnothing^2(\beta) = \frac{1}{|\alpha_2-\alpha_1)} \cdot \int_{\alpha_1}^{\alpha_2} \varnothing^2(\beta,\alpha)\,d\alpha$$

9. Procédé selon une des revendications 5 à 8, caractérisé en ce que les spectres de densité de puissance de référence correspondants sont formés et mis en mémoire pour différents angles principaux d'inclinaison ($\beta_1$) de l'axe principal de faisceau ($r_1$) et/ou pour différentes distances ($r_o$) du plan de référence (B) du détecteur radar Doppler (D) dans la zone de rayonnement proche et/ou la zone de rayonnement lointain du détecteur radar (D).

10. Procédé selon une des revendications 1 à 9, caractérisé en ce que les déviations du spectre de densité de puissance moyen ($|Y_m(f)|^2$) par rapport aux spectres de densité de puissance de référence ($|H(\beta(v_1,f))|^2$, ..., $|H(\beta(v_4,f))|^2$) sont déterminés selon la fonction d'erreur

$$E_m(v) = \frac{1}{(f_2-f_1)} \cdot \int_{f_1}^{f_2} \left|\,|H(\beta(v,f))|^{c1} - |\bar{y}_m(f)|^{c1}\right|^{c2}\,df$$

avec des constantes $c_1$ et $c_2$ positives , ou selon la fonction d'erreur

$$\tilde{E}_m(v) = \frac{1}{(f_2-f_1)} \cdot \int_{f_1}^{f_2} F_1\{F_2[H(\beta(v,f))]-F_2[\bar{y}_m(f)]\}\,df$$

avec des fonctions $F_1$ et $F_2$ préfixées.

11. Procédé selon la revendication 10, caractérisé en ce que, avec $c_1 = c_2 = 2$, la fonction d'erreur prend la forme d'une formule à plus petit carré moyen.

**12.** Procédé selon une des revendications 1 à 9, caractérisé en ce que le maximum de la fonction φ(v), obtenue par corrélation croisée dans la gamme de fréquences selon la relation

$$\varphi(v) = (1/(f_2-f_1)) \cdot \int_{f_1}^{f_2} |\bar{y}_m(f)| \cdot |H(\beta(v,f))| \, df$$

est déterminé et la valeur de vitesse appartenant à ce maximum est déterminée comme la vitesse de l'objet.

**13.** Procédé selon une des revendications précédentes, caractérisé en ce la vitesse de l'objet est d'abord estimée grossièrement et une plage de vitesse contenant la vitesse estimée grossièrement est fixée ensuite et que, lors de la comparaison du spectre de densité de puissance moyen ($|\hat{Y}_m(f)|^2$) avec les spectres de densité de puissance de référence ($|\hat{H}(\beta(v_1,f))|^2, \ldots, |\hat{H}(\beta(v_4,f))|^2$), seuls sont utilisés les spectres de densité de puissance de référence dont les vitesses coordonnées tombent dans la plage de vitesse fixée et/ou que, lors du calcul de la déviation du spectre de densité de puissance moyen ($|Y_m(f)|^2$) par rapport aux spectres de densité de puissance de référence utilisés pour la comparaison, la fonction d'erreur ($E_m(v)$; $\bar{Y}_m(v)$) est calculée seulement dans la gamme de fréquences correspondant à la plage de vitesse fixée.

**14.** Procédé selon une des revendications précédentes, caractérisé en ce que le spectre de densité de puissance moyen ($|\hat{Y}_m(f)|^2$) et les spectres de densité de puissance de référence ($|\hat{H}(\beta(v_1,f))|^2, \ldots, |\hat{H}(\beta(v_4,f))|^2$) sont normalisés avant la comparaison, de préférence selon la prescription:

$$|\hat{H}(\beta(v,f))| = |H(\beta(v,f)| \ / \max_{f_1<f<f_2} \{|H(\beta(v,f))|\}$$

et

$$|\hat{y}_m(f)| = |\bar{y}_m(f)| \ / \max_{f_1<f<f_2} \{|\bar{y}_m(f)|\}$$

**15.** Procédé selon une des revendications précédentes, caractérisé en ce que les valeurs de vitesse de l'objet coordonnées aux différents spectres de densité de puissance moyens ($|\hat{Y}_m(f)|^2$) sont soumises à un lissage supplémentaire.

**16.** Procédé selon la revendication 15, caractérisé en ce que le lissage supplémentaire est effectué par la formation de moyennes de valeurs de vitesse voisines, de préférence au moyen d'un filtrage numérique non récursif, au moyen d'un filtrage numérique récursif, au moyen du calcul de courbes de régression, au moyen d'un filtre Kalman ou au moyen d'un procédé de corrélation croisée dans la gamme de fréquences.

**17.** Procédé selon une des revendications précédentes, caractérisé en ce que le signal de réception du détecteur radar Doppler (D) est extrait du mélange à l'état analogique dans la bande de base et que ce signal en bande de base est numérisé.

**18.** Procédé selon la revendication 17. caractérisé en ce que le signal numérique en bande de base est limité dans sa largeur de bande à la gamme partielle de fréquences concernée autour de la fréquence Doppler instantanée.

**19.** Procédé selon la revendication 18, caractérisé en ce que la limitation de bande du signal numérique en bande de base est effectuée au moyen d'une démodulation en quadrature suivie d'un filtrage passe-bas numérique et d'un sous-échantillonnage n:1, de préférence 4:1 ou 8:1 ou 16:1.

**20.** Procédé selon une des revendications précédentes, caractérisé en ce que le fenêtrage est exécuté sous la forme d'un fenêtrage rectangulaire ou, de préférence sous la forme d'un fenêtrage, de préférence avec chevauchement, utilisant des fenêtres aplaties aux bords.

**21.** Procédé selon une des revendications précédentes, caractérisé en ce que les spectres de densité de puissance des différentes portions de signal sont formés au moyen d'une transformation de Fourier numérique, de préférence sous la forme d'un procédé de transformation de Fourier rapide ou au moyen d'un procédé d'estimation spectrale non linéaire.

**22.** Procédé selon une des revendications précédentes, caractérisé en ce que l'établissement des moyennes des spectres de densité de puissance de portions de signal voisines est effectué au moyen d'un procédé de Welch.

**23.** Dispositif pour la mise en oeuvre du procédé de détermination de la vitesse d'un objet en mouvement au moyen d'au moins un détecteur Doppler selon une des revendications précédentes, le détecteur Doppler étant placé sur l'objet ou à un point de mesure, procédé selon lequel un signal numérique en bande de base est tiré, dans une unité de traitement de signal, du signal de réception, rétrodiffusé par une aire de diffusion, du détecteur Doppler ou d'au moins un détecteur Doppler, le signal numérique en bande de base étant subdivisé ensuite, par un fenêtrage dans une unité de fenêtrage, en portions de signal individuelles, pour lesquelles sont formés après cela, dans une unité d'analyse spectrale, les spectres de densité de puissance coordonnés, à l'aide desquels est déterminée la vitesse de l'objet, caractérisé en ce

- que l'unité de fenêtrage (4), recevant à son entrée le signal en bande de base numérisé, est reliée par sa sortie à l'entrée de l'unité d'analyse spectrale (5); et
- qu'une mémoire (7), contenant les spectres de densité de puissance de référence, ainsi que l'unité d'analyse spectrale (5), sont raccordées par leurs sorties à une unité de comparaison et d'exploitation (8) pour déterminer la vitesse de l'objet.

**24.** Dispositif selon la revendication 23, caractérisé en ce

- que l'unité de fenêtrage (4) fonctionne avec des fenêtres ($4_1$; $4_2$) rectangulaires ou aplaties aux bords, de préférence chevauchantes, et/ou
- que l'unité d'analyse spectrale (5) fonctionne selon un procédé de transformation de Fourier numérique, de préférence selon un procédé de transformation de Fourier rapide, ou selon un procédé d'estimation spectrale non linéaire, et/ou
- qu'un dispositif (6) d'établissement de spectres moyens est connecté entre l'unité d'analyse spectrale (5) et l'unité de comparaison et d'exploitation (8).

**25.** Dispositif selon la revendication 23 ou 24, caractérisé en ce que l'entrée de l'unité de fenêtrage (4) est précédée d'un convertisseur A/N (2) et ce convertisseur est de préférence précédé d'un filtre antirepliement (1), et/ou que la sortie de l'unité de comparaison et d'exploitation (8) est suivie d'une unité de lissage (9) pour lisser les valeurs de vitesse délivrées par l'unité de comparaison et d'exploitation (8).

**26.** Dispositif selon la revendication 25, caractérisé en ce qu'une unité de limitation de bande (3) est connectée entre le convertisseur A/N (2) et l'unité de fenêtrage (4).

**27.** Dispositif selon la revendication 26, caractérisé en ce que l'unité de limitation de bande (3) est composée d'un démodulateur en quadrature ($3_1$, $3_2$, $3_7$, $3_8$) monté à la sortie du convertisseur A/N (2), d'une unité de filtrage passe-bas numérique ($3_3$, $3_4$) montée à la suite de ce démodulateur ($3_1$, $3_2$, $3_7$, $3_8$) et d'une unité de commutation ($3_5$ $3_6$) pour le sous-échantillonnage montée à la suite de cette unité de filtrage ($3_3$, $3_4$).

**28.** Dispositif selon la revendication 27, caractérisé en ce que la fréquence de référence ($f_R$) du démodulateur en quadrature ($3_1$, $3_2$, $3_7$, $3_8$) est réglable par une unité de commande ($3_9$) en fonction de la vitesse instantanée de l'objet.

**29.** Dispositif selon la revendication 28, caractérisé en ce que, à travers une ou plusieurs lignes de commande ($3_{10}$-$3_{12}$), l'unité de commande ($3_9$) reçoit des signaux de commande pour le réglage de la fréquence de référence ($f_R$) du démodulateur en quadrature ($3_1$, $3_2$, $3_7$, $3_8$) à partir du dispositif (6) d'établissement de spectres moyens et/ou l'unité de comparaison et d'exploitation (8) et/ou l'unité de lissage (9).

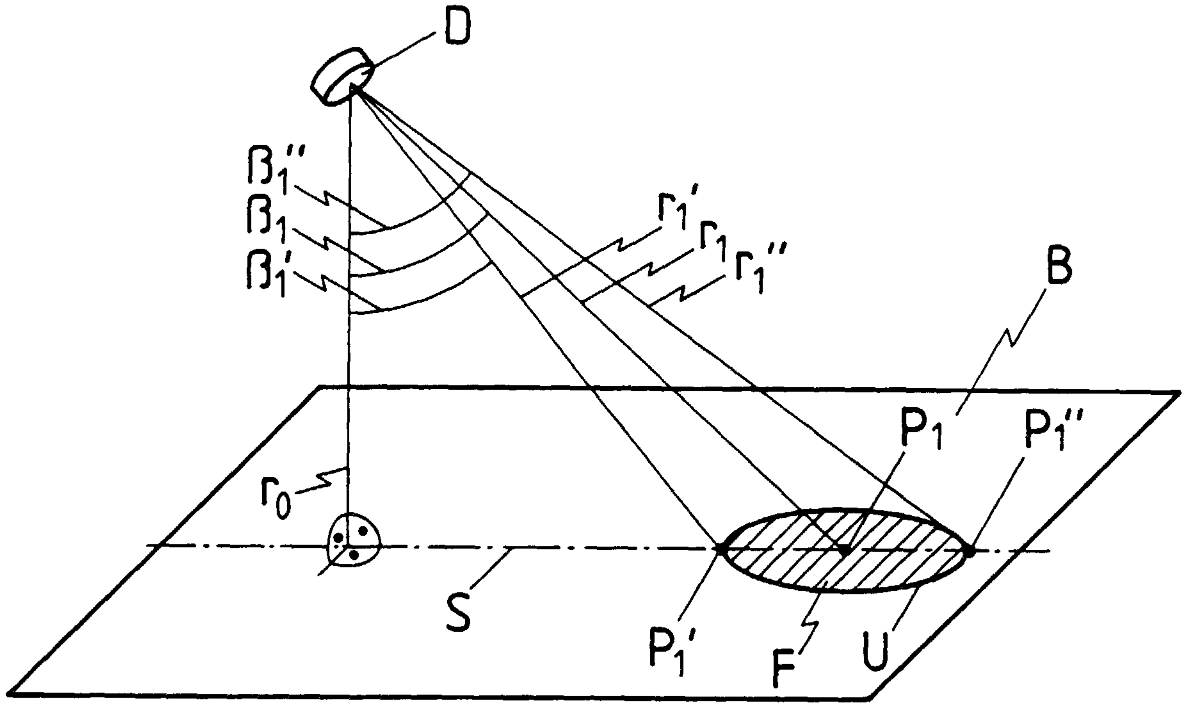
D
ß1''
ß1
ß1'
r1'
r1
r1''
B
P1
P1''
r0
S
P1'
F
U

FIG. 1

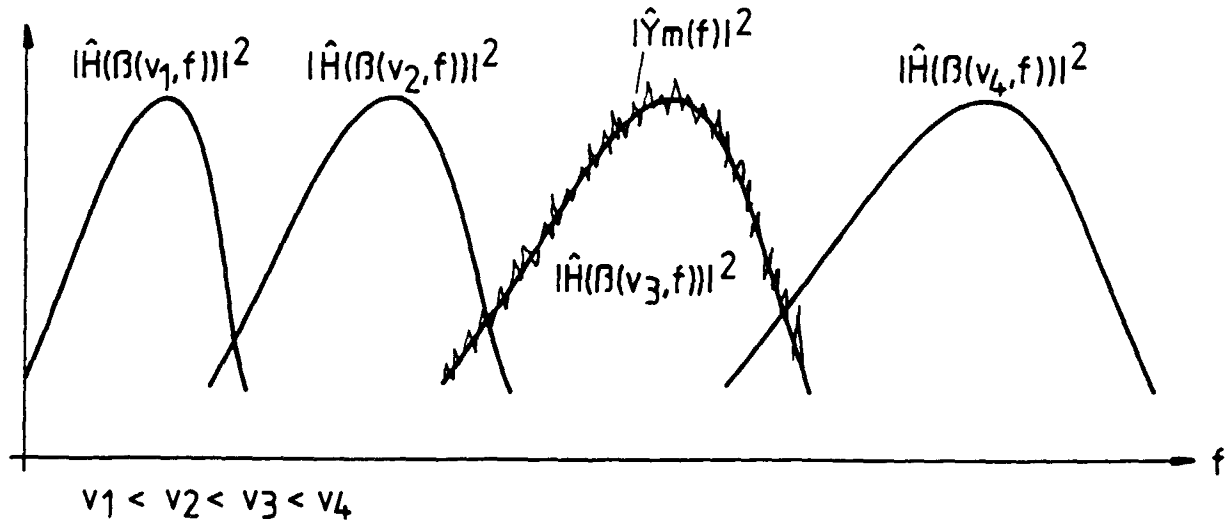
|Ĥ(ß(v1,f))|2
|Ĥ(ß(v2,f))|2
|Ŷm(f)|2
|Ĥ(ß(v4,f))|2
|Ĥ(ß(v3,f))|2
f
v1 < v2 < v3 < v4

FIG. 2

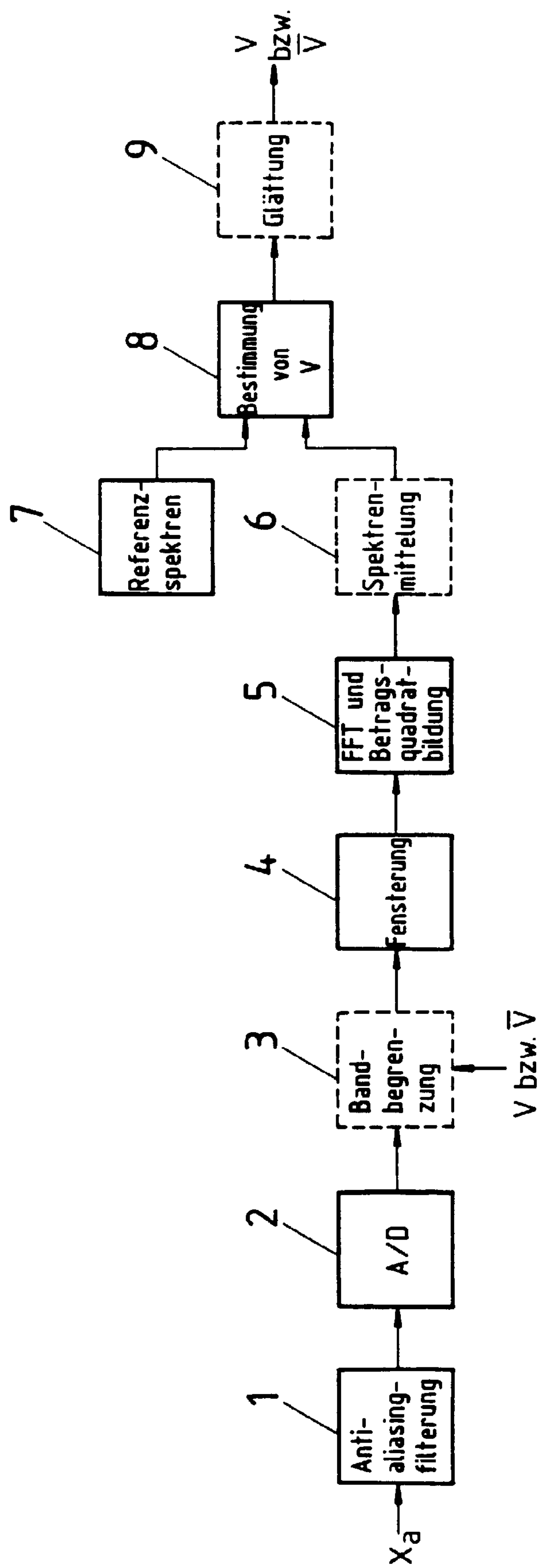

Xa
1
Anti-aliasing-filterung
2
A/D
3
Band-begren-zung
V bzw. V̄
4
Fensterung
5
FFT und Betrags-quadrat-bildung
6
Spektren-mittelung
7
Referenz-spektren
8
Bestimmung von V
9
Glättung
V bzw. V̄


FIG. 3

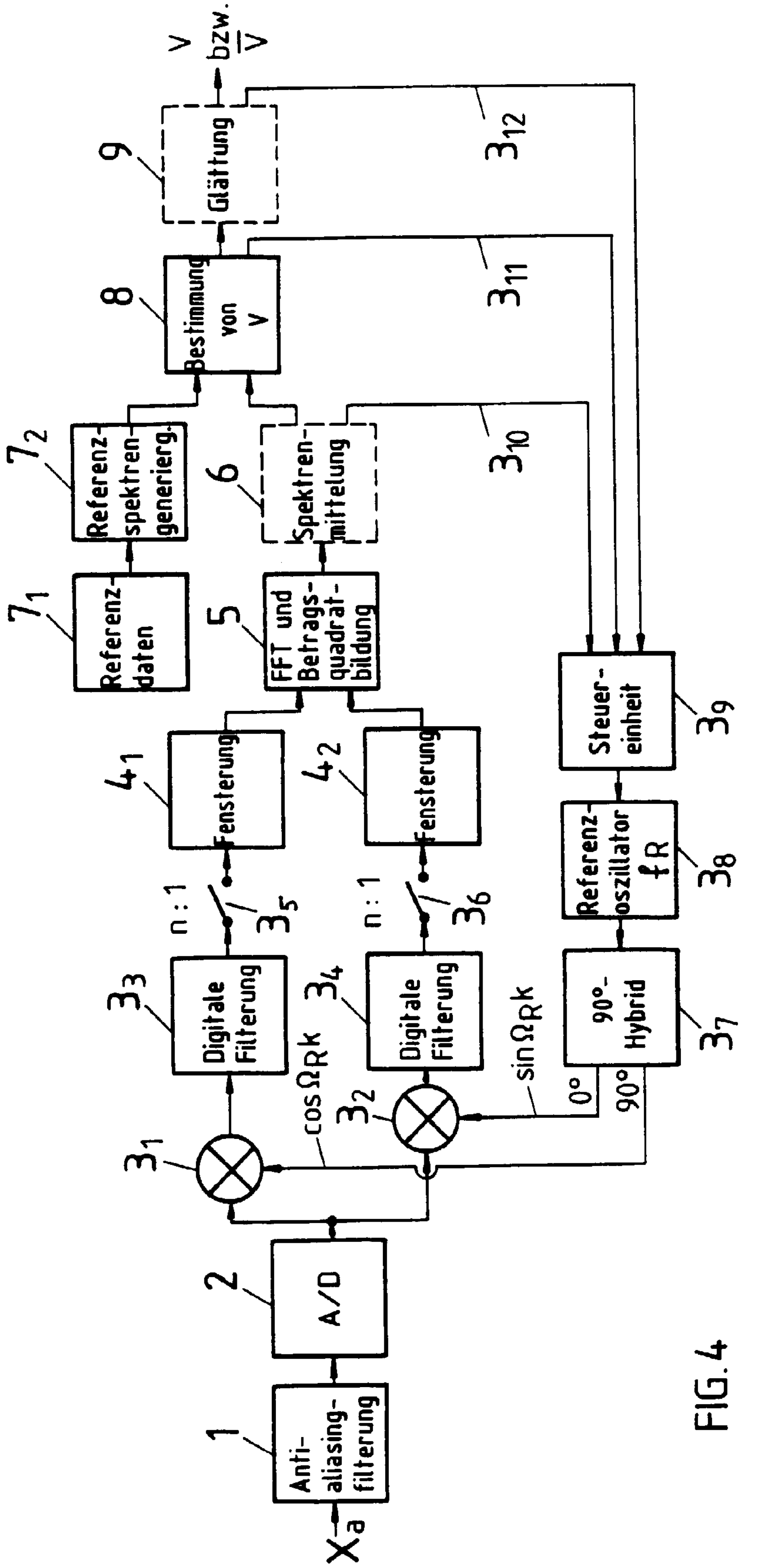
Xa
Anti-aliasing-filterung
1
A/D
2
3₁
3₂
cos Ω_R k
sin Ω_R k
Digitale Filterung
3₃
Digitale Filterung
3₄
n : 1
3₅
n : 1
3₆
Fensterung
4₁
Fensterung
4₂
FFT und Betragsquadratbildung
5
Spektrenmittelung
6
Referenzdaten
7₁
Referenzspektrengenerierg.
7₂
Bestimmung von V
8
Glättung
9
V bzw. V̄
0°
90°
90°-Hybrid
3₇
Referenzoszillator f_R
3₈
Steuereinheit
3₉
3₁₀
3₁₁
3₁₂

FIG. 4